(19) Europäisches Patentamt
European Patent Office
Office européen des brevets

(11) **EP 2 865 520 B1**

(12) **EUROPEAN PATENT SPECIFICATION**

(45) Date of publication and mention of the grant of the patent:
**06.09.2023 Bulletin 2023/36**

(21) Application number: **13807462.0**

(22) Date of filing: **21.06.2013**

(51) International Patent Classification (IPC):
***B32B 27/00*** *(2006.01)* ***B32B 7/06*** *(2019.01)*
***G09F 3/04*** *(2006.01)* ***G09F 15/02*** *(2006.01)*

(52) Cooperative Patent Classification (CPC):
**B32B 27/08; B32B 7/06; B32B 7/12; B32B 27/20; B32B 27/283; B32B 27/32; B32B 27/322; B32B 27/34; B32B 27/36; B32B 38/0008; G09F 3/04; G09F 7/12;** B32B 37/12; B32B 2037/1063; B32B 2037/243; (Cont.)

(86) International application number:
**PCT/JP2013/067145**

(87) International publication number:
**WO 2013/191289 (27.12.2013 Gazette 2013/52)**

(54) **ELECTROSTATICALLY ADSORPTIVE SHEET AND METHOD FOR PRODUCING THE SAME**
ELEKTROSTATISCHE ADSORPTIONSFOLIE UND VERFAHREN ZUR HERSTELLUNG DAVON
FEUILLE ÉLECTROSTATIQUEMENT ADSORBANTE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2012 JP 2012140863**
**22.06.2012 JP 2012140864**

(43) Date of publication of application:
**29.04.2015 Bulletin 2015/18**

(73) Proprietor: **Yupo Corporation**
**Tokyo 101-0062 (JP)**

(72) Inventors:
- **KOIKE Hiroshi**
**Kamisu-shi**
**Ibaraki 314-0102 (JP)**
- **YAHAGI Yuichi**
**Kamisu-shi**
**Ibaraki 314-0102 (JP)**
- **IIDA Seiichiro**
**Tokyo 101-0062 (JP)**

(74) Representative: **Zimmermann & Partner Patentanwälte mbB**
**Postfach 330 920**
**80069 München (DE)**

(56) References cited:
**WO-A1-92/00361** **WO-A1-2009/154177**
**WO-A1-2012/086791** **JP-A- 2001 301 104**
**JP-A- 2001 301 104** **JP-U- H01 152 371**
**US-A- 5 665 448** **US-A1- 2011 143 104**
**US-A1- 2011 155 311** **US-A1- 2011 155 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**(Cont. next page)**

(52) Cooperative Patent Classification (CPC): (Cont.)
B32B 2255/10; B32B 2255/26; B32B 2264/102; B32B 2264/104; B32B 2307/20; B32B 2307/412; B32B 2307/718; B32B 2310/025; B32B 2457/20; B32B 2590/00; G09F 2007/125

**Description**

TECHNICAL FIELD

The present invention relates to electrostatic adsorbable sheets with which printed matters having no pressure-sensitive adhesiveness, e.g., signs, posters and advertising leaflets, or fluororesin-containing resin films on which characters and the like can be written with writing utensils employing a water-based or oil-based ink or the like and the written characters or the like can be easily erased as on whiteboards, can be easily applied to adherends by electrostatic adsorbability.

An electrostatic adsorbable sheet includes, as a constituent component thereof, an adsorbable sheet which has electrostatic adsorbability. Because of this, a printed matter or a fluororesin-containing resin film can be applied to an adherend through the electrostatic adsorbable sheet. Air bubbles are less apt to be trapped between the sheet and the adherend, and the printed matter or the fluororesin-containing resin film can be displayed on the adherend and used over a long period.

Furthermore, electrostatic adsorbable sheets are lightweight and easy to carry and, after use, can be easily peeled from the adherends and reapplied.

BACKGROUND ART

As a printed display material which can be applied to adherends, such as walls, and used in this state and which can be easily stripped off thereafter, use has conventionally been made of a display material obtained by using a special sheet in which one surface thereof has been coated beforehand with a pressure-sensitive adhesive having satisfactory releasability and printing, on the other surface of the sheet, characters or a design to be displayed.

Since such special sheets employ a pressure-sensitive adhesive, these sheets are prone to arouse troubles, for example, that the pressure-sensitive adhesive protrudes from the edges and adheres to apparatus or other display sheets in the later printing step or cutting step, resulting in a decrease in operation efficiency. There have also been drawbacks, for example, that since the display sheet has a pressure-sensitive adhesive disposed thereon beforehand, it is impossible to print the pressure-sensitive surface of the sheet.

In order to overcome such problems, patent document 1 and patent document 2 disclose a technique in which a printed matter having no pressure-sensitive adhesiveness is displayed using a double-faced pressure-sensitive adhesive sheet having satisfactory releasability.

According to this technique, a printed image or the like can be displayed also on the pressure-sensitive adhesive side, and there is a merit in that in cases when the printed matter is applied to a transparent adherend such as a glass plate, the printed image or the like is visible through the adherend. However, such a printed matter to be applied using a pressure-sensitive adhesive has had a drawback that since the air remaining between the adherend and the pressure-sensitive adhesive is difficult to remove, air bubbles are prone to partly remain therebetween to impair the appearance of the printed matter viewed through the adherend. Furthermore, there has been a problem in that application of the printed matter to an adherend such as a wall surface or a pillar and removal thereof from the adherend result in an adhesive residue remaining on the adherend side or in peeling of the surface paint of the adherend.

Document US 2011/0155311 A1 discloses a removable surface layer 120 that can removably adhere to a substrate or to an underlying removable surface layer by a strong semi-permanent bond. The semi-permanent bond can include one of an adhesive and an electrostatic attraction. The substrate can be of a material and shape to provide a support for the removable surface layers. Multiple removable surface layer can be provided on top of each other.

Document JP 2001 301104 A discloses a display article protecting sheet preventing the fading of a display article caused by ultraviolet rays, the protecting sheet including a fluorine type olefinic film on a base material.

Document US 5,665,448 discloses a device for detachably adhering a manipulative to a substrate using electrostatic charges.

Document US 2011/0143104 A1 relates to an electrostatic adsorbable sheet having a label layer and a peelable sheet layer.

Apart from printed matters, whiteboards have conventionally been frequently utilized in places such as conference rooms in order to communize information and ideas and advance the discussions.

At present, whiteboards which are lightweight and portable (whiteboard sheets, etc.) have been commercialized in order to extend the range of use of whiteboards. These whiteboards are films on which writing with a writing utensil is possible and the written characters or the like can be erased and which have been rendered applicable to adherends with a pressure-sensitive adhesive or magnets, as disclosed in patent document 3.

However, like the printed matters, the whiteboard sheet employing a pressure-sensitive adhesive has a problem in that application thereof to an adherend, such as a wall surface or a pillar, and removal thereof from the adherend result in an adhesive residue remaining on the adherend side or in peeling of the surface paint of the adherend. The whiteboard sheet equipped with magnets on the back surface thereof is usable only in limited places, although capable of being attached to walls made of a magnetic substance such as iron.

Meanwhile, patent document 4 discloses a technique for obtaining a resin film which can be directly applied to wall surfaces, etc. and used and which can be easily stripped off without fouling the adherends, by imparting electrostatic adsorption force to a resin film.

In this technique, use is made of a film of a thermoplastic resin (mainly a polypropylene resin) which has high insulating properties and easily comes to hold charges upon a charging treatment and to which electrostatic adsorbability can be imparted thereby. The resin film obtained is excellent in terms of mechanical strength, transparency, chemical resistance, moistureproofness, heat resistance, etc.

However, in cases when this resin film itself is printed, the resin film undesirably adheres to components, e.g., rolls, of the printing machine or sheets thereof are apt to adhere together, resulting in blocking, due to the adsorbability thereof. It has hence been difficult to continuously print a large number of sheets thereof by sheet-feed offset printing or the like.

Furthermore, although writing on this resin film is possible as on whiteboards, the written characters and the like are difficult to erase as compared with those on whiteboards and the resin film is poor in written-image erasability. There frequently are cases where the ink remains, for example, in scratches formed by writing and is unable to be completely removed. The whiteboard sheet obtained using a fluororesin film in order to impart written-image erasability thereto for the purpose of overcoming that drawback has had a problem in that the fluororesin film is considerably inferior to the polypropylene film in electrostatic adsorption force even after a charging treatment. Because of these, no sheet which has both excellent electrostatic adsorption force and written-image erasability has been completed so far.

Cited References

Patent References

Patent Reference 1: JP-A 2000-297260
Patent Reference 2: JP-A 2001-220560
Patent Reference 3: JP-A 2010-046961
Patent Reference 4: JP-T 10-504248

DISCLOSURE OF THE INVENTION

PROBLEMS TO BE SOLVED BY THE INVENTION

An object of the present invention, in view of the drawbacks of the prior-art techniques, is to provide an electrostatic adsorbable sheet in which both surfaces are adhesive and with which a printed matter having no pressure-sensitive adhesiveness, e.g., a sign, a poster or an advertising leaflet, or a resin film including a fluororesin and being excellent in terms of suitability for writing thereon and written-image erasability can be applied as a display material to an adherend and which is lightweight and portable, can be easily attached to adherends by electrostatic adsorption force and easily detached therefrom, and is less apt to arouse the trouble of leaving air bubbles between the adherend and the sheet.

MEANS FOR SOLVING THE PROBLEMS

The present inventors diligently made investigations in order to overcome the problems. As a result, the inventors have found that an electrostatic adsorbable sheet having the desired properties can be provided by configuring a laminate having a specific structure. The present invention has been thus completed.

That is, the present invention is as follows.

(1) An electrostatic adsorbable sheet (iii) which is a laminate in accordance with claim 1, comprising:

an adsorbable sheet (i) comprising a resin film layer (A) having an adhesive layer (C) formed on one surface thereof, wherein the adhesive layer (C) contains a pressure-sensitive adhesive, and a release sheet layer (E) is further disposed on the adhesive layer; and
a support layer (ii) comprising a resin film layer (B), wherein the surface of the support layer (ii) which is not in contact with the resin film layer (A) has antistatic performance,

wherein the resin film layer (A) of the adsorbable sheet (i) and the resin film layer (B) of the support layer (ii) are adherent to each other by electrostatic adsorption.

(2) An electrostatic adsorbable sheet (iii) which is a laminate in accordance with claim 1, comprising:

an adsorbable sheet (i) comprising a resin film layer (A) having an adhesive layer (C) formed on one surface thereof, wherein the adhesive layer (C) contains a pressure-sensitive adhesive, and a release sheet layer (E) is further disposed on the adhesive layer (C); and
an adsorbable sheet (iv) comprising a resin film layer (B) having an adhesive layer (D) formed over one surface thereof,
wherein the resin film layer (A) of the adsorbable sheet (i) and the resin film layer (B) of the adsorbable sheet (iv) are adherent to each other by electrostatic adsorption.

(3) The electrostatic adsorbable sheet (iii) described in (1) above, wherein the support layer (ii) comprises the resin film layer (B) having a coat layer (L) formed on one surface thereof.
(4) The electrostatic adsorbable sheet (iii) described in (2) above, wherein the adsorbable sheet (iv) comprises the adhesive layer (D), a coat layer (L), and the resin film layer (B) in this order.
(5) The electrostatic adsorbable sheet (iii) described in (2) or (4) above, wherein a release sheet layer (F) is further disposed on the adhesive layer (D).
(6) The electrostatic adsorbable sheet (iii) described in (2) or (4) above, wherein a printed sheet layer (H) is further disposed on the adhesive layer (D).
(7) The electrostatic adsorbable sheet (iii) described in (2) or (4) above, wherein a protective layer (J) is further disposed on the adhesive layer (D).
(8) The electrostatic adsorbable sheet (iii) described in (6) above, wherein the adhesive layer (D) has a basis weight of 3-60 g/m$^2$ and the printed sheet layer (H) has a basis weight of 20-500 g/m$^2$.
(9) The electrostatic adsorbable sheet (iii) described in (7) above, wherein the adhesive layer (D) has a basis weight of 3-60 g/m$^2$ and the protective layer (J) has a basis weight of 0.1-500 g/m$^2$.
(10) The electrostatic adsorbable sheet (iii) described in any one of (2) and (4) to (9) above, wherein the adhesive layer (D) comprises any of an acrylic pressure-sensitive adhesive, a rubber-based pressure-sensitive adhesive, a urethane-based pressure-sensitive adhesive, and a silicone-based pressure-sensitive adhesive.
(11) The electrostatic adsorbable sheet (iii) described in any one of (1) to (10) above, wherein the adsorbable sheet (i) comprises the adhesive layer (C), a coat layer (K), and the resin film layer (A) in this order.
(12) The electrostatic adsorbable sheet (iii) described in (11) above, wherein the adsorbable sheet (i) comprises the adhesive layer (C), a printed image, the coat layer (K), and the resin film layer (A) in this order.
(13)
(14) The electrostatic adsorbable sheet (iii) described in any one of (1) to (12) above, wherein a printed sheet layer (G) is further disposed on the adhesive layer (C).
(15) The electrostatic adsorbable sheet (iii) described in any one of (1) to (12) above, wherein a protective layer (I) is further disposed on the adhesive layer (C).
(16) The electrostatic adsorbable sheet (iii) described in (15) above, wherein the protective layer (I) comprises a resin film which contains a fluororesin.
(17) The electrostatic adsorbable sheet (iii) described in (16) above, wherein the protective layer (I) is a multilayered resin film and the outermost layer of the protective layer (I) is a fluororesin film.
(18) The electrostatic adsorbable sheet (iii) described in (16) above, wherein the protective layer (I) is a multilayered resin film and the outermost layer of the protective layer (I) comprises a coat layer which contains a fluororesin.
(19) The electrostatic adsorbable sheet (iii) described in any one of (1) to (18) above, wherein the resin film layer (A) and the resin film layer (B) contain a thermoplastic resin.
(20) The electrostatic adsorbable sheet (iii) described in (19) above, wherein the thermoplastic resin comprises any of a polyolefin resin, a functional-group-containing polyolefin resin, a polyamide resin, and a thermoplastic polyester resin.
(21) The electrostatic adsorbable sheet (iii) described in any one of (1) to (20) above, wherein the surface of the resin film layer (A) which is in contact with the resin film layer (B) and the surface of the resin film layer (B) which is in contact with the resin film layer (A) each have a surface resistivity of $1\times10^{13}$-$9\times10^{17}$ $\Omega$.
(22) The electrostatic adsorbable sheet (iii) described in any one of (1) to (21) above, wherein the resin film layer (A) and the resin film layer (B) each have a basis weight of 20-500 g/m$^2$.
(23) The electrostatic adsorbable sheet (iii) described in (14) above, wherein the adhesive layer (C) has a basis weight of 3-60 g/m$^2$ and the printed sheet layer (G) has a basis weight of 20-500 g/m$^2$.
(24) The electrostatic adsorbable sheet (iii) described in (15) above, wherein the adhesive layer (C) has a basis weight of 3-60 g/m$^2$ and the protective layer (I) has a basis weight of 0.1-500 g/m$^2$.

(25) The electrostatic adsorbable sheet (iii) described in any one of (1) to (24) above, wherein the adhesive layer (C) contains any of an acrylic pressure-sensitive adhesive, a rubber-based pressure-sensitive adhesive, a urethane-based pressure-sensitive adhesive, and a silicone-based pressure-sensitive adhesive.

(26) A method for producing the electrostatic adsorbable sheet (iii) described in any one of (1) to (25) above, comprising subjecting a resin film layer (A) and/or a resin film layer (B) to a charging treatment, laminating the resin film layer (A) with the resin film layer (B) by electrostatic adsorption, and then forming an adhesive layer (C) on the surface which is on the resin film layer (A) side.

(27) A method for producing the electrostatic adsorbable sheet (iii) described in any one of (1) to (25) above, comprising forming an adhesive layer (C) on one surface of a resin film layer (A), subsequently subjecting the resin film layer (A) and/or a resin film layer (B) to a charging treatment, and laminating the resin film layer (A) with the resin film layer (B) by electrostatic adsorption.

(28) The method for producing an electrostatic adsorbable sheet (iii) described in (26) above, wherein an adhesive layer (D) is formed on the surface which is on the resin film layer (B) side.

(29) The method for producing an electrostatic adsorbable sheet (iii) described in (27) above, wherein an adhesive layer (D) is formed on one surface of the resin film layer (B) and the resin film layer (A) and/or the resin film layer (B) are subjected to the charging treatment.

(30) A method for producing the electrostatic adsorbable sheet (iii) described in any one of (15) to (22), (24), and (25) above, wherein a resin film layer (A) and/or a resin film layer (B) are subjected to a charging treatment, the resin film layer (A) is laminated with the resin film layer (B) by electrostatic adsorption, and then a protective layer (I) is laminated through an adhesive layer (C) to the surface which is on the resin film layer (A) side.

(31) A method for producing the electrostatic adsorbable sheet (iii) described in any one of (15) to (22), (24), and (25) above, wherein a protective layer (I) is laminated through an adhesive layer (C) to one surface of a resin film layer (A), subsequently the resin film layer (A) and/or a resin film layer (B) are subjected to a charging treatment, and the resin film layer (A) is laminated with the resin film layer (B) by electrostatic adsorption.

(32) A method for producing the electrostatic adsorbable sheet (iii) described in any one of (15) to (22), (24), and (25) above, wherein a resin film layer (A) and/or a resin film layer (B) are subjected to a charging treatment, the resin film layer (A) is laminated with the resin film layer (B) by electrostatic adsorption, subsequently a printed image is formed on the surface which is on the resin film layer (A) side, and a protective layer (I) is laminated to the printed image through an adhesive layer (C).

(33) A method for producing the electrostatic adsorbable sheet (iii) described in any one of (15) to (22), (24), and (25) above, wherein a printed image is formed on one surface of a resin film layer (A), a protective layer (I) is laminated to the printed image through an adhesive layer (C), subsequently the resin film layer (A) and/or a resin film layer (B) are subjected to a charging treatment, and the resin film layer (A) is laminated with the resin film layer (B) by electrostatic adsorption.

(34) A display material comprising the adsorbable sheet (i) and the printed sheet layer (G), which is obtained by removing the support layer (ii) or the adsorbable sheet (iv) from the electrostatic adsorbable sheet (iii) described in (14) above.

(35) A display material comprising the adsorbable sheet (i) and the protective layer (I), which is obtained by removing the support layer (ii) or the adsorbable sheet (iv) from the electrostatic adsorbable sheet (iii) described in (15) above.

(36) A display material comprising the adsorbable sheet (iv) and the printed sheet layer (H), which is obtained by removing the adsorbable sheet (i) from the electrostatic adsorbable sheet (iii) described in (6) above.

(37) A display material comprising the adsorbable sheet (iv) and the protective layer (J), which is obtained by removing the adsorbable sheet (i) from the electrostatic adsorbable sheet (iii) described in (7) above.

(38) A display material comprising the adsorbable sheet (i) and the printed sheet layer (G), which is obtained by removing the support layer (ii) or the adsorbable sheet (iv) from the electrostatic adsorbable sheet (iii) described in (14) above and the surface of which on the resin film layer (A) side is applied to an adherend by electrostatic adsorption.

(39) A display material comprising the adsorbable sheet (i) and the protective layer (I), which is obtained by removing the support layer (ii) or the adsorbable sheet (iv) from the electrostatic adsorbable sheet (iii) described in (15) above and the surface of which on the resin film layer (A) side is applied to an adherend by electrostatic adsorption.

(40) The display material described in (38) above, wherein the resin film layer (A), the adhesive layer (C) and the adherend are transparent, and the printed image on the printed sheet layer (G) is visible through the adherend.

(41) An electrostatic adsorbable sheet (iii) which is a laminate comprising:

an adsorbable sheet (i) comprising a resin film layer (A) having a coat layer containing a fluororesin formed on one surface thereof; and

a support layer (ii) comprising a resin film layer (B),

wherein the resin film layer (A) of the adsorbable sheet (i) and the resin film layer (B) of the support layer (ii) are adherent to each other by electrostatic adsorption.

EFFECTS OF THE INVENTION

The electrostatic adsorbable sheets of the present invention each are a both-surface-adhesive electrostatic adsorbable sheet in which a printed matter (printed sheet layer) having no pressure-sensitive adhesiveness or a resin film (protective layer) including a fluororesin is held by the adhesive layer disposed on one surface of the adsorbable sheet that constitutes the electrostatic adsorbable sheet and which can be applied to various adherends because of the excellent electrostatic adsorbability of the adsorbable sheet.

According to the electrostatic adsorbable sheets of the present invention, a printed matter having no pressure-sensitive adhesiveness can be applied as a poster, advertising leaflet, or the like to an adherend and displayed and the air trapped between the adherend and the sheet can be easily removed. Air bubbles are less apt to remain, and the appearance of the printed matter is not impaired. Furthermore, the electrostatic adsorbable sheets retain high electrostatic adsorption force during the display and use, and the persistence of the electrostatic adsorption force is sufficient. The electrostatic adsorbable sheets hence can be displayed and used on adherends over a long period and, after the use, can be easily stripped off. Moreover, the electrostatic adsorbable sheets can be reapplied after the stripping, and the display position can be easily adjusted after the application. In addition, the electrostatic adsorbable sheets have a feature wherein the electrostatic adsorption force is less apt to be affected by moisture.

Furthermore, in cases when the resin film layers and the adhesive layer of each electrostatic adsorbable sheet are transparent or translucent and the adherend is transparent or translucent and when a printed matter is applied to the adherend through this electrostatic adsorbable sheet, then the information, such as characters or a design, of the printed matter of the resultant display material can be viewed through both the electrostatic adsorbable sheet and the adherend.

Moreover, according to an electrostatic adsorbable sheet of the present invention, a protective layer (a resin film including a fluororesin) can be applied as a display material to various adherends and displayed. Since this protective layer has excellent suitability for writing thereon and written-image erasability, this display material can be repeatedly used as a whiteboard.

This electrostatic adsorbable sheet of the present invention in which constant information has been recorded as a printed layer beneath the protective layer has an advantage in that the constant information inside the sheet is not impaired when variable information written on the protective layer is erased.

BRIEF DESCRIPTION OF THE DRAWINGS

[Fig. 1] Fig. 1 is a cross-sectional view of one embodiment of the electrostatic adsorbable sheets of the present invention.
[Fig. 2] Fig. 2 is a cross-sectional view of another embodiment of the electrostatic adsorbable sheets of the present invention.
[Fig. 3] Fig. 3 is a cross-sectional view of another embodiment of the electrostatic adsorbable sheets of the present invention.
[Fig. 4] Fig. 4 is a cross-sectional view of another embodiment of the electrostatic adsorbable sheets of the present invention.
[Fig. 5] Fig. 5 is a cross-sectional view of another embodiment of the electrostatic adsorbable sheets of the present invention.
[Fig. 6] Fig. 6 is a cross-sectional view of another embodiment of the electrostatic adsorbable sheets of the present invention.
[Fig. 7] Fig. 7 is a cross-sectional view of another embodiment of the electrostatic adsorbable sheets of the present invention.
[Fig. 8] Fig. 8 is a cross-sectional view of another embodiment of the electrostatic adsorbable sheets of the present invention.
[Fig. 9] Fig. 9 is a cross-sectional view of another embodiment of the electrostatic adsorbable sheets of the present invention.
[Fig. 10] Fig. 10 is a cross-sectional view of another embodiment of the electrostatic adsorbable sheets of the present invention.
[Fig. 11] Fig. 11 is a cross-sectional view of another embodiment of the electrostatic adsorbable sheets of the present invention.

[Fig. 12] Fig. 12 is a cross-sectional view of another embodiment of the electrostatic adsorbable sheets of the present invention.

[Fig. 13] Fig. 13 is a cross-sectional view of another embodiment of the electrostatic adsorbable sheets of the present invention.

[Fig. 14] Fig. 14 is a cross-sectional view of another embodiment of the electrostatic adsorbable sheets of the present invention.

[Fig. 15] Fig. 15 is a cross-sectional view of another embodiment of the electrostatic adsorbable sheets of the present invention.

[Fig. 16] Fig. 16 is a cross-sectional view of another embodiment of the electrostatic adsorbable sheets of the present invention.

[Fig. 17] Fig. 17 is a cross-sectional view of another embodiment of the electrostatic adsorbable sheets of the present invention.

[Fig. 18] Fig. 18 is a cross-sectional view of another embodiment of the electrostatic adsorbable sheets of the present invention.

[Fig. 19] Fig. 19 is a cross-sectional view of another embodiment of the electrostatic adsorbable sheets of the present invention.

[Fig. 20] Fig. 20 is a cross-sectional view of another embodiment of the electrostatic adsorbable sheets of the present invention.

[Fig. 21] Fig. 21 is a cross-sectional view of another embodiment of the electrostatic adsorbable sheets of the present invention.

[Fig. 22] Fig. 22 is a cross-sectional view of another embodiment of the electrostatic adsorbable sheets of the present invention.

[Fig. 23] Fig. 23 is a cross-sectional view of another embodiment of the electrostatic adsorbable sheets of the present invention.

[Fig. 24] Fig. 24 is a cross-sectional view of another embodiment of the electrostatic adsorbable sheets of the present invention.

[Fig. 25] Fig. 25 is a cross-sectional view of another embodiment of the electrostatic adsorbable sheets of the present invention.

[Fig. 26] Fig. 26 is a cross-sectional view of another embodiment of the electrostatic adsorbable sheets of the present invention.

[Fig. 27] Fig. 27 is a cross-sectional view of another embodiment of the electrostatic adsorbable sheets of the present invention.

[Fig. 28] Fig. 28 shows one example of batch type corona discharge treatment devices usable for the charging treatment according to the present invention, the example employing acicular application electrodes as the main electrode.

[Fig. 29] Fig. 29 shows one example of batch type corona discharge treatment devices usable for the charging treatment according to the present invention, the example employing a metal wire-shaped application electrode as the main electrode.

[Fig. 30] Fig. 30 shows one example of continuous corona discharge treatment devices usable for the charging treatment according to the present invention, the example employing acicular application electrodes as the main electrode.

[Fig. 31] Fig. 31 shows one example of continuous corona discharge treatment devices usable for the charging treatment according to the present invention, the example employing a metal wire-shaped application electrode as the main electrode.

[Fig. 32] Fig. 32 shows one example of continuous corona discharge treatment devices usable for the charging treatment according to the present invention, the example employing acicular application electrodes as the main electrode.

[Fig. 33] Fig. 33 is a diagrammatic view of the apparatus for producing an electrostatic adsorbable sheet (iii) which was used in the Examples according to the present invention.

[Fig. 34] Fig. 34 is a diagrammatic view of the device for measuring electrostatic adsorption force which was used in the Examples according to the present invention.

[Fig. 35] Fig. 35 is a diagrammatic view of one embodiment of the display materials of the present invention.

[Fig. 36] Fig. 36 is a diagrammatic view of one embodiment of the display materials of the present invention.

[Fig. 37] Fig. 37 is a diagrammatic view of another embodiment of the display materials of the present invention.

[Fig. 38] Fig. 38 is a diagrammatic view of another embodiment of the display materials of the present invention.

[Fig. 39] Fig. 39 is a diagrammatic view of another embodiment of the display materials of the present invention.

EMBODIMENTS FOR CARRYING OUT THE INVENTION

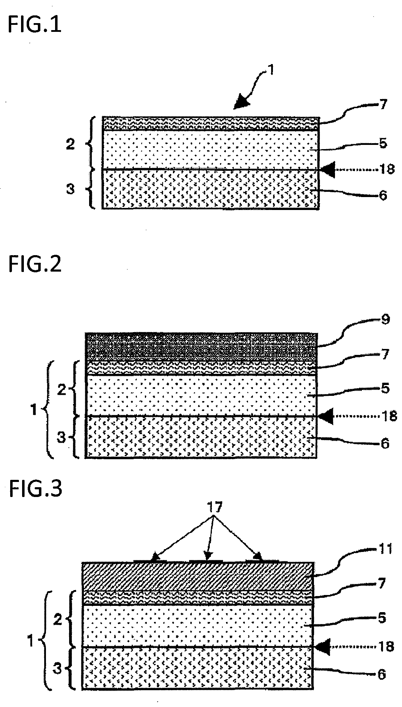

The electrostatic adsorbable sheet of the present invention is, as shown in Fig. 1, an electrostatic adsorbable sheet (iii) 1 which includes a laminate obtained by laminating an adsorbable sheet (i) 2 including a resin film layer (A) 5 having an adhesive layer (C) 7 formed over one surface thereof with a support layer (ii) 3 including a resin film layer (B) 6, wherein the resin film layer (A) 5 of the adsorbable sheet (i) 2 and the resin film layer (B) 6 of the support layer (ii) 3 are adherent to each other at the respective adhesion surfaces 18 by electrostatic adsorption.

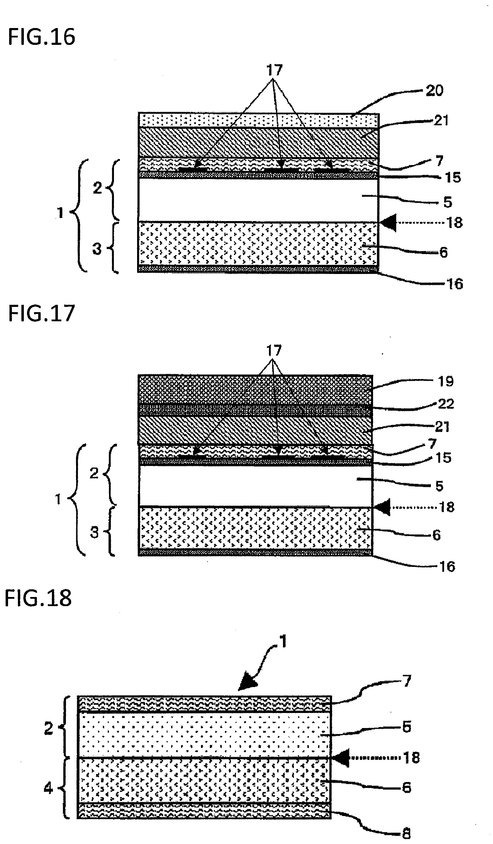

In addition, the other electrostatic adsorbable sheet of the present invention is, as shown in Fig. 18, an electrostatic adsorbable sheet (iii) 1 which includes a laminate obtained by laminating an adsorbable sheet (i) 2 including a resin film layer (A) 5 having an adhesive layer (C) 7 formed over one surface thereof with an adsorbable sheet (iv) 4 including a resin film layer (B) 6 having an adhesive layer (D) 8 formed over one surface thereof, wherein the resin film layer (A) 5 of the adsorbable sheet (i) 2 and the resin film layer (B) 6 of the adsorbable sheet (iv) 4 are adherent to each other at the respective adhesion surfaces 18 by electrostatic adsorption.

In the electrostatic adsorbable sheet of the present invention, a printed matter or the like having no pressure-sensitive adhesiveness (printed sheet layer (G)) or a resin film including a fluororesin (protective layer (I)) can be bonded to the surface of the adhesive layer (C). In the adsorbable sheet (i) obtained by removing the support layer (ii) from the electrostatic adsorbable sheet, the surface thereof on the resin film layer (A) side can be adsorbed to adherends by static electricity.

The members which constitute each electrostatic adsorbable sheet of the present invention are explained below in detail.

[Adsorbable Sheet (i)]

The adsorbable sheet (i) as a constituent component of the electrostatic adsorbable sheet of the present invention includes a resin film layer (A) having an adhesive layer (C) formed over one surface thereof.

The adsorbable sheet (i) has electrostatic adsorbability imparted to the surface thereof where the resin film layer (A) is exposed (hereinafter, that surface is referred to as "surface on the resin film layer (A) side", and has the adhesive layer (C) on the opposite surface.

The adsorbable sheet (i) is used in such a manner that a printed matter having no pressure-sensitive adhesiveness, a resin film including a fluororesin, or the like is bonded to the surface of the sheet which is on the adhesive layer (C) side, by the adhesive force of the adhesive, while the surface thereof on the resin film layer (A) side is bonded to an adherend by electrostatic adsorption. The adsorbable sheet (i) thus interposes between the two, thereby being capable of serving as a so-called double-faced pressure-sensitive adhesive sheet to apply the printed matter or the like to the adherend. The display material thus obtained can be used as a seal, label, sign, poster, advertising leaflet, or the like or as an easy-to-carry whiteboard in accordance with the contents of display, size, shape, and display mode.

The adsorbable sheet (i) can be used to apply a printed matter, resin film, or the like to various adherends and display the printed matter or the like, owing to the electrostatic adsorbability of the surface thereof on the resin film layer (A) side. The adsorbable sheet (i) has the following features. During the use for display, the electrostatic adsorption force is high and the persistence of the electrostatic adsorption force is sufficient. The printed matter or the like can hence be displayed and used over a long period. The electrostatic adsorption force is less apt to be affected by moisture. After the use, the printed matter or the like can be easily stripped off together with the adsorbable sheet (i).

The adsorbable sheet (i) includes a resin film layer (A), which will be described later in detail. The adsorbable sheet (i) can be obtained by subjecting the resin film layer (A) to a charging treatment and forming an adhesive layer (C) on the resin film layer (A).

Production of the adsorbable sheet (i) from a resin film layer (A) can be attained by subjecting one surface of the resin film layer (A) to a charging treatment, subsequently laminating a support layer (ii) including a resin film layer (B) to the treated surface, and then forming an adhesive layer (C) on the untreated surface of the resin film layer (A). The production can be attained also by forming an adhesive layer (C) on one surface of a resin film layer (A), forming a release sheet layer (E), a printed sheet layer (G), or a protective layer (I) on the adhesive layer (C), and then subjecting the other surface of the resin film layer (A) to a charging treatment.

Alternatively, the production can be attained in the following manner. One surface of a resin film (A) is subjected to a charging treatment and, thereafter, a support layer (ii) including a resin film layer (B) is laminated to the treated surface to temporarily form a layered product. Separately therefrom, an adhesive layer (C) is formed on one surface of a resin film (A), and a release sheet layer (E), printed sheet layer (G), or protective layer (I) is formed on the adhesive layer (C) to temporarily form a layered product. The two resin films are bonded to each other by a technique such as dry laminating to obtain a resin film layer (A).

It is preferable that the resin film layer (A) in the adsorbable sheet (i) should have such a structure that it is easy to subject the resin film layer (A) to a charging treatment from the standpoint of imparting electrostatic adsorbability thereto and that the charges generated by the charging treatment are easily held within the film layer.

The suitability of the resin film layer (A) for a charging treatment and the charge-holding performance thereof can be controlled by regulating the surface resistivity. It is preferable that in the adsorbable sheet (i), the surface resistivity of that surface on the resin film layer (A) side which is to be subjected to a charging treatment should be in the range of $1\times10^{13}$-$9\times10^{17}$ Ω. The surface resistivity thereof is more preferably in the range of $5\times10^{13}$-$9\times10^{16}$ Ω, even more preferably in the range of $1\times10^{14}$-$9\times10^{15}$ Ω.

The resin film layer (A) having a surface resistivity less than $1\times10^{13}$ Q tends to be difficult to charge because the charges given by performing a charging treatment are prone to get away along the surface. In addition, the charges once given to the resin film layer (A) are prone to get away along the surface to the outside (e.g., into the air), and there is a tendency that the adsorbable sheet (i) cannot retain the charges over a long period and the electrostatic adsorption force is prone to decrease.

Meanwhile, the resin film layer (A) having a surface resistivity exceeding $9\times10^{17}$ Ω should have no problem concerning performance. However, such a highly insulating surface is difficult to form using any currently known substance, or is highly costly even if obtainable. Consequently, it is difficult to actually obtain such resin film layer (A).

The resin film layer (A) having such a surface resistivity can be attained by selecting a thermoplastic resin for constituting the layer, depending on whether a surface treatment is given to the resin film layer (A), etc.

It is preferable in the present invention that the adsorbable sheet (i) should be one in which the surface thereof on the resin film layer (A) side is subjected to no treatment and made to have a surface resistivity in the range of $1\times10^{13}$-$9\times10^{17}$ Q and the other surface is subjected to a surface treatment for prevention of static buildup to impart antistatic performance thereto. The impartation of antistatic performance to said one surface makes it possible to effectively prevent adhesion of dust particles and the like to the resin film layer (A), adhesion of the resin film layer (A) to rolls, and other troubles after the surface of the adsorbable sheet (i) which is on the resin film layer (A) side has undergone the charging treatment and during the processing step for forming an adhesive layer (C) thereon. It is therefore possible to further heighten the production efficiency.

Examples of techniques for imparting antistatic performance to the other surface of the adsorbable sheet (i) include a method in which an antistatic agent is incorporated into the resin film layer (A) and a method in which the coat layer (K) which will be described later is formed on one surface of the resin film layer (A). In cases when an antistatic agent is incorporated into the resin film layer (A), there are cases where an antistatic effect is produced only when a surface treatment with a corona discharge or a surface treatment with a flame is performed. In particular, in stretched films, there are cases where the antistatic effect differs considerably between the treated surface and the untreated surface. This phenomenon can be utilized to form a resin film layer (A) in which one surface has antistatic performance.

The adsorbable sheet (i) may be either transparent or opaque in the case where the adherend is opaque like walls, lockers, etc. However, in the case where the adherend is a transparent object or the like, such as a glass plate, acrylic plate, polycarbonate plate, or the like, the adsorbable sheet (i) having high transparency is suitable. For example, in cases when the printed sheet layer (G) to be used in a display material is a both-side-printed matter and when the adsorbable sheet (i) and the adherend are transparent, that printed surface of the printed sheet layer (G) which is in contact with the adsorbable sheet (i) can be viewed through both the adsorbable sheet (i) and the adherend.

It is therefore preferable that the adsorbable sheet (i) in each electrostatic adsorbable sheet of the present invention should be transparent or translucent. Namely, it is preferable that the resin film layer (A) and the adhesive layer (C), which constitute the adsorbable sheet (i), should be transparent or translucent. The total light transmittance, as an index to such transparency, of the adsorbable sheet (i) is preferably 60-100%, more preferably 70-100%, especially preferably 80-100%. So long as the total light transmittance thereof is 60% or higher, the image or information possessed by a printed matter applied to this adsorbable sheet (i) so that the printed design faces the adsorbable sheet (i) is satisfactorily visible, and the printed matter applied to a transparent adherend, such as a glass plate, acrylic plate, or polycarbonate plate, is satisfactorily visible. Such high transparency can be attained by selecting the resin film layer (A) and the adhesive layer (C), which constitute the sheet.

[Resin Film Layer (A)]

In the present invention, the resin film layer (A) is a constituent component of the adsorbable sheet (i), and can be made to retain charges inside by directly subjecting the resin film layer (A) to a charging treatment or by rendering the resin film layer (A) dielectric by bringing the layer (A) into contact with the resin film layer (B) of a support layer (ii) or adsorbable sheet (iv), the resin film layer (B) having undergone a charging treatment. The resultant electrostatic charges render the adsorbable sheet (i) electrostatic adsorbable.

It is preferable that the resin film layer (A) should include a thermoplastic resin. Especially preferred is to use a thermoplastic resin having excellent insulating properties. This is because this film layer is apt to hold accumulated charges inside.

Thermoplastic resins usable as the resin film layer (A) are not particularly limited in the kind thereof so long as the resins have insulating properties and are capable of holding charges inside. Usable as the thermoplastic resins are, for example: polyolefin resins such as high-density polyethylene, medium-density polyethylene, low-density polyethylene, propylene-based resins, and poly(methyl-1-pentene); functional-group-containing polyolefin resins such as ethylene/vinyl acetate copolymers, ethylene/acrylic acid copolymers, maleic-acid-modified polyethylene, and maleic-acid-modified polypropylene; polyamide resins such as nylon-6 and nylon-6,6; thermoplastic polyester resins such as poly(ethylene terephthalate), copolymers thereof, and poly(butylene terephthalate) or aliphatic polyesters such as poly(butylene succinate) and poly(lactic acid); and polycarbonates, atactic polystyrene, syndiotactic polystyrene, and the like. These thermoplastic resins can ensure sufficient transparency. Preferred of these thermoplastic resins are polyolefin resins and functional-group-containing polyolefin resins, which are excellent in terms of insulating property and processability. It is especially preferred to use a polyolefin resin.

More specific examples of the polyolefin resins include homopolymers of olefins such as ethylene, propylene, butylene, hexene, octene, butadiene, isoprene, chloroprene, and methyl-1-pentene and copolymers formed from two or more of these olefins.

Preferred of these polyolefin resins are propylene-based resins, from the standpoints of insulating property, charge-holding property, processability, mechanical strength, cost, etc. It is desirable to use a propylene-based resin which includes, as the main component, any of polypropylenes (propylene homopolymers) which are isotactic or syndiotactic and show various kinds of stereoregularity and propylene copolymers obtained by copolymerizing propylene as the main component with one or more $\alpha$-olefins such as ethylene, 1-butene, 1-hexene, 1-heptene, and 4-methyl-1-pentene. The propylene copolymers may be copolymers of two monomers mainly including propylene or of three or more monomers mainly including propylene, or may be random copolymers or block copolymers. Also usable is a propylene-based resin into which a resin having a lower melting point than the propylene homopolymer has been incorporated in an amount of 2-25% by weight. Examples of such a resin having a low melting point include high-density to low-density polyethylenes.

More specific examples of the functional-group-containing polyolefin resins include copolymers of the olefins shown above with a functional-group-containing monomer copolymerizable therewith.

Especially representative examples of such a functional-group-containing monomer are: styrene compounds such as styrene and $\alpha$-methylstyrene; carboxylic acid vinyl esters such as vinyl acetate, vinyl propionate, vinyl butyrate, vinyl pivalate, vinyl caproate, vinyl laurate, vinyl stearate, vinyl benzoate, vinyl butylbenzoate, and vinyl cyclohexanecarboxylate (or vinyl alcohols obtained by saponifying these carboxylic acid vinyl esters after copolymerization); acrylic acid, methacrylic acid, and (meth)acrylic acid esters such as methyl (meth)acrylate, ethyl (meth)acrylate, butyl (meth)acrylate, hexyl (meth)acrylate, octyl (meth)acrylate, 2-ethylhexyl (meth)acrylate,, stearyl (meth)acrylate, benzyl (meth)acrylate, cyclohexyl (meth)acrylate, isobornyl (meth)acrylate, and dicyclopentanyl (meth)acrylate; (meth)acrylamides such as (meth)acrylamide and N-methylol(meth)acrylamide; and vinyl ethers such as methyl vinyl ether, ethyl vinyl ether, propyl vinyl ether, butyl vinyl ether, cyclopentyl vinyl ether, cyclohexyl vinyl ether, benzyl vinyl ether, and phenyl vinyl ether. Use can be made of a copolymer obtained by suitably selecting one or more monomers, according to need, from these functional-group-containing monomers and copolymerizing the monomer(s).

These polyolefin resins and functional-group-containing polyolefin resins can be used also in the form of graft modification products according to need for the purpose of regulating the insulating properties or electrostatic potential thereof.

For the graft modification of the resins, known techniques can be used. Specific examples thereof include graft modification with an unsaturated carboxylic acid or a derivative thereof. Examples of the unsaturated carboxylic acid include acrylic acid, methacrylic acid, maleic acid, fumaric acid, itaconic acid, and citraconic acid. Examples of the derivative of an unsaturated carboxylic acid include acid anhydrides, esters, amides, imides, and metal salts.

Specific examples thereof include maleic anhydride, itaconic anhydride, citraconic anhydride, methyl (meth)acrylate, ethyl (meth)acrylate, butyl (meth)acrylate, glycidyl (meth)acrylate, maleic acid monoethyl ester, maleic acid diethyl ester, fumaric acid monomethyl ester, fumaric acid dimethyl ester, itaconic acid monomethyl ester, itaconic acid diethyl ester, (meth)acrylamide, maleic acid monoamide, maleic acid diamide, N-monoethylmaleamide, N,N-diethylmaleamide, N-monobutylmaleamide, N,N-dibutylmaleamide, fumaric acid monoamide, fumaric acid diamide, N-monoethylfumaramide, N,N-diethylfumaramide, N-monobutylfumaramide, N,N-dibutylfumaramide, maleimide, N-butylmaleimide, N-phenylmaleimide, sodium (meth)acrylate, and potassium (meth)acrylate.

Usable graft modification products are ones obtained by graft-modifying polyolefin resins and functional-group-containing polyolefin resins using a graft monomer in an amount of usually 0.005-10% by weight, preferably 0.01-5% by weight, based on the resins.

As the thermoplastic resin(s) for forming the resin film layer (A), one thermoplastic resin selected from the thermoplastic resins shown above may be used alone or two or more thermoplastic resins may be selected therefrom and used in combination.

The resin film layer (A) may be one to which an inorganic fine powder and/or an organic filler has been added in such an amount as not to impair the transparency of the resin film layer (A). The addition of an inorganic fine powder or an organic filler makes it possible to regulate the permittivity of the film or inhibit the thermoplastic resin sheets from adhering to each other. In addition, the addition thereof, combined with the stretching step which will be described later, facilitates formation of pores inside, rendering a weight reduction in the resin film layer (A) possible.

As the inorganic fine powder, use can be made, for example, of calcium carbonate, calcined clay, silica, diatomaceous earth, clay, talc, titanium oxide, barium sulfate, barium titanate, alumina, zeolite, mica, sericite, bentonite, sepiolite, vermiculite, dolomite, wollastonite, glass fibers, or the like. In the case of adding an inorganic fine powder, use is made of one which has an average particle diameter, as determined with a particle size distribution analyzer based on laser diffraction, of usually 0.01-15 $\mu$m, preferably 0.1-5 $\mu$m.

In the case of adding an organic filler, it is preferred to select a resin of a kind different from that of the thermoplastic resin serving as the main component of the resin film layer (A). For example, in the case where the thermoplastic resin is a polyolefin resin, use can be made of an organic filler which is a polymer such as poly(ethylene terephthalate), poly(butylene terephthalate), a polycarbonate, nylon-6, nylon-6,6, a polycycloolefin, polystyrene, or a polymethacrylate and has a higher melting point (e.g., 170-300°C) or a higher glass transition temperature (e.g., 170-280°C) than the polyolefin resin and which is incompatible with the polyolefin resin.

The total amount of such inorganic fine powders or organic fillers to be incorporated into the resin film layer (A) is preferably 0-3% by weight, more preferably 0-1% by weight. Especially preferred is not to add the powder or filler intentionally. So long as the addition amount thereof is 3% by weight or less, the total light transmittance described above is easy to attain and image visibility through transparent adherends is satisfactory.

Furthermore, a heat stabilizer (antioxidant), light stabilizer, dispersant, lubricant, nucleator, etc. can be added to the resin film layer (A) according to need. In the case of adding a heat stabilizer, the stabilizer is added in an amount usually in the range of 0.001-1% by weight. Specifically, a heat stabilizer of the steric-hindrance phenol, phosphorus or amine compound type or the like can be used. In the case of using a light stabilizer, the stabilizer is used in an amount usually in the range of 0.001-1% by weight. Specifically, a light stabilizer of the steric-hindrance amine, benzotriazole, or benzophenone compound type or the like can be used. A dispersant and a lubricant are used, for example, for the purpose of dispersing an inorganic fine powder. The use amount thereof is usually in the range of 0.01-4% by weight. Specifically, use can be made of silane coupling agents, higher fatty acids such as oleic acid and stearic acid, metal soaps, poly(acrylic acid), poly(methacrylic acid), salts of these, etc.

[Multilayer Formation]

The resin film layer (A) may have a single-layer structure, or may be a layer having a two-layer structure or a multilayer structure composed of three or more layers. By configuring the resin film layer (A) so as to be composed of multiple layers, the voltage resistance thereof can be improved and various functions including suitability for writing, abrasion resistance, and secondary processability can be added. In the case where the resin film layer (A) is made to have a multilayer structure, various known methods can be used. Examples thereof include: dry laminating in which various adhesives are used, wet laminating, and melt laminating; multilayer-die methods (coextrusion methods) in which a feed block and a multi-manifold are used; extrusion laminating in which multiple dies are used; and coating techniques in which various coaters are used. It is also possible to use a multilayer die and extrusion laminating in combination.

[Stretching]

It is preferable that the resin film layer (A) should include a stretched resin film which has been stretched at least uniaxially. Stretched thermoplastic resin films obtained through stretching are lightweight thin films and have excellent evenness in thickness. Electrostatic charge is hence even in the plane directions, and even electrostatic adsorption force is easy to attain. In the case where the resin film layer (A) has a multilayer structure, the layers constituting this film layer (A) may have been stretched in the following mode: uniaxial/uniaxial, uniaxial/biaxial, biaxial/uniaxial, uniaxial/uniaxial/biaxial, uniaxial/biaxial/uniaxial, biaxial/uniaxial/uniaxial, uniaxial/biaxial/biaxial, biaxial/biaxial/uniaxial, or biaxial/biaxial/biaxial.

The stretching of the resin film layer (A) can be conducted by any of various methods in common use or by a combination thereof. Specific examples of stretching methods include machine-direction stretching in which a difference in peripheral speed between rolls is utilized, transverse-direction stretching in which a tenter oven is used, sequential biaxial stretching in which the machine-direction stretching and the transverse-direction stretching are used in combination, rolling, simultaneous biaxial stretching based on a combination of a tenter oven and a linear motor, and simultaneous biaxial stretching based on a combination of a tenter oven and a pantograph. Examples of methods for stretching inflation films include simultaneous biaxial stretching based on a tubular method.

Stretch ratios are not particularly limited, and are suitably determined while taking account of the properties of the thermoplastic resin used for the resin film layer (A), the material properties of the resin film layer (A) to be obtained, etc. For example, in the case where a propylene homopolymer or copolymer is used as the thermoplastic resin and this polymer is stretched uniaxially, the stretch ratio is usually 1.2-12, preferably 2-10. In the case of biaxial stretching thereof, the stretch ratio in terms of areal ratio is usually 1.5-60, preferably 4-50. In the case where another thermoplastic resin is used and stretched uniaxially, the stretch ratio is usually 1.2-10, preferably 2-5. In the case of biaxial stretching thereof, the stretch ratio in terms of areal ratio is usually 1.5-20, preferably 4-12.

A temperature for the stretching is suitably determined within a known temperature range suitable for the thermoplastic resin mainly used in the resin film layer (A), the temperature range being from the glass transition temperature of the thermoplastic resin to the melting point of the crystalline portions thereof. Specifically, in the case where the thermoplastic resin of the resin film layer (A) is a propylene homopolymer (melting point, 155-167°C) or high-density polyethylene (melting point, 121-136°C), the stretching temperature is 100-166°C or 70-135°C, respectively, these temperatures being lower by 1-70°C than the melting points. It is preferable that the stretching speed should be 20-350 m/min.

In cases when the resin film layer (A) contains the inorganic fine powder or organic filler described above and has undergone stretching, there are cases where fine pores have been formed in the film. However, these pores considerably reduce the light transmittance of the resin film layer (A). Consequently, the porosity of the resin film layer (A), as calculated using the following formula (1), is regulated to preferably 0-10%, more preferably 0-5%. In case where the porosity thereof exceeds 10%, the light-diffusing effect of the pores reduces the light transmittance of the resin film layer (A) and this tends to make it difficult to obtain a resin film layer (A) having a desirable total light transmittance.

[Math. 1]

$$\text{Porosity (\%)} = [(\rho_0-\rho)/\rho_0]\times 100 \qquad (1)$$

(In formula (1), $\rho_0$ represents the true density of the resin film layer (A) and $\rho$ represents the density of the resin film layer (A).)

In the case where the resin film layer (A) contains the inorganic fine powder or organic filler described above and is subjected to stretching, pore formation in the resin film layer (A) can be reduced by taking a measure, for example, using a stretching temperature elevated to around the melting point of the thermoplastic resin.

It is preferable that the resin film layer (A) should have a thickness in the range of 20-500 μm. The thickness thereof is more preferably in the range of 30-400 μm, especially preferably in the range of 40-300 μm. In case where the thickness of the resin film layer (A) is less than 20 μm, this layer (A) has reduced mechanical strength and, when a printed sheet layer (G) or a protective layer (I) is applied to the layer (A) or when the layer (A) is applied to an adherend, then creases are prone to result and the application is prone to be unsatisfactory, resulting in a poor appearance. Conversely, in case where the thickness thereof exceeds 500 μm, not only static charges cannot be sufficiently injected into inner portions but also the adsorbable sheet (i) has an increased own weight and is prone to be unable to be held by the electrostatic adsorption force and fall from the adherend.

It is also preferable that the resin film layer (A) should have a basis weight in the range of 20-500 g/m$^2$. The basis weight thereof is more preferably in the range of 30-400 g/m$^2$, especially preferably in the range of 40-300 g/m$^2$. The basis weight of the resin film layer (A) is proportional to the amount of static charges capable of being held in the layer (A). Consequently, in case where the basis weight of the resin film layer (A) is less than 20 g/m$^2$, this layer (A) has a reduced electrostatic capacity and the adsorbable sheet (i) is prone to fall from the adherend. Conversely, in case where the basis weight thereof exceeds 500 g/m$^2$, not only it is difficult to sufficiently inject static charges into inner portions but also the adsorbable sheet (i) has an increased own weight and is prone to fall from the adherend in this case also, although this resin film layer (A) is sufficient from the standpoint of electrostatic capacity.

[Adhesive Layer (C)]

In the present invention, the adhesive layer (C) is a constituent component of the adsorbable sheet (i) and, owing to the pressure-sensitive adhesive force thereof, renders the adsorbable sheet (i) bondable to a printed matter having no pressure-sensitive adhesiveness (printed sheet layer (G)) or a resin film including a fluororesin (protective layer (I)).

The adhesive layer (C) is formed by forming a layer of a pressure-sensitive adhesive on one surface of the resin film layer (A) or by disposing a layer-shaped pressure-sensitive adhesive on one surface of the resin film layer (A). The kind of pressure-sensitive adhesive and the thickness (application amount) thereof can be variously selected in accordance with the atmosphere in which the display material is to be used, pressure-sensitive adhesive strength, etc.

As the pressure-sensitive adhesive, use can be made of an acrylic pressure-sensitive adhesive, a rubber-based pressure-sensitive adhesive, a urethane-based pressure-sensitive adhesive, or a silicone-based pressure-sensitive adhesive. Examples of the acrylic pressure-sensitive adhesive include ones having a glass transition temperature of -20°C or lower, such as 2-ethylhexyl acrylate/n-butyl acrylate copolymers and 2-ethylhexyl acrylate/ethyl acrylate/methyl methacrylate copolymers. Examples of the rubber-based pressure-sensitive adhesive include polyisobutylene rubbers, butyl rubbers, and mixtures thereof, and further include mixtures obtained by incorporating a tackifier, such as an abietic acid rosin ester, a terpene/phenol copolymer, or a terpene/indene copolymer, into these rubber-based pressure-sensitive adhesives. Examples of the urethane-based pressure-sensitive adhesive include mixtures of a polyester polyol, polyether polyol, polycarbonate polyol, or polylactone polyol with an isocyanate compound. Examples of the silicone-based pressure-sensitive adhesive include the condensation curing type based on a mixture of an organopolysiloxane having hydroxyl groups at the ends with a crosslinking agent or the addition curing type based on a mixture of an organopolysiloxane having vinyl groups at the ends with a crosslinking agent. It is preferred to use acrylic pressure-sensitive adhesives, among these, from the standpoints of transparency and cost.

Usually, these pressure-sensitive adhesives each include a resinous ingredient having a high molecular weight, and are used in the form of a solution in an organic solvent or a dispersion or emulsion in water or in the form of a hot-melt adhesive. An easy method for forming the adhesive layer (C) according to the present invention is to apply a pressure-sensitive adhesive in a solution state, such as the solvent type or the emulsion type, directly to a surface of the resin film layer (A) or to a release sheet layer (E), which will be described later in detail, and dry and solidify the pressure-sensitive adhesive applied. For this application, use can be made of a technique employing a roll coater, blade coater, bar coater, air-knife coater, gravure coater, reverse coater, die coater, lip coater, spray coater, comma coater, or the like. Smoothing is further conducted according to need, and the pressure-sensitive adhesive applied is then subjected to a drying step. Thus, the adhesive layer (C) is formed.

In a general method for forming an adhesive layer (C) on the resin film layer (A), a pressure-sensitive adhesive is applied to a release sheet layer (E) to form an adhesive layer (C) and the resin film layer (A) is laminated thereto. In some cases, however, a pressure-sensitive adhesive can be directly applied to the resin film layer (A) to form the layer (C).

The formation of an adhesive layer (C) on the resin film layer (A) may be conducted either before the charging treatment, which will be described later in detail, is given to the resin film layer (A) or after the charging treatment.

The basis weight (application amount) of the adhesive layer (C) is not particularly limited. However, the basis weight thereof in terms of solid amount is usually in the range of 3-60 $g/m^2$, preferably in the range of 10-40 $g/m^2$.

[Support Layer (ii)]

The support layer (ii) as a constituent component of the electrostatic adsorbable sheet (iii) of the present invention is laminated to that surface of the adsorbable sheet (i) which is on the resin film layer (A) side, by means of the electrostatic adsorption force of the adsorbable sheet (i) or the electrostatic adsorption force of the support layer (ii) itself. When the adsorbable sheet (i) is used, this support layer (ii) is removed like the release paper of pressure-sensitive adhesive labels.

The support layer (ii) serves not only to prevent the charges accumulated in the adsorbable sheet (i) from being released to the outside, until the adsorbable sheet (i) is used, for example, for displaying a printed matter, but also to prevent the adsorbable sheet (i) from exerting the electrostatic adsorption force of the inner portions thereof on the outside and to thereby keeping the electrostatic adsorbable sheet (iii) satisfactorily handleable.

The support layer (ii) includes a resin film layer (B). The resin film layer (B) is constituted of a resin which is a dielectric, and this configuration enables that surface of the resin film layer (B) which is in contact with the resin film layer (A) to be bonded to the resin film layer (A) by the electrostatic adsorption force of either the resin film layer (A) or the resin film layer (B) itself.

Meanwhile, it is preferable that the other surface of the support layer (ii) should have antistatic performance. In cases when said other surface of the support layer (ii) has antistatic performance, the electrostatic adsorbable sheet (iii) including the adsorbable sheet (i) and this support layer (ii) laminated therewith is prevented from exerting the electrostatic adsorption force on the outside and is less apt to arouse troubles, such as adhesion to the periphery and adhesion to itself, during handling such as transportation, storage, and printing. Namely, this electrostatic adsorbable sheet (iii) has satisfactory handleability.

Consequently, although the support layer (ii) is removed like the release paper of pressure-sensitive adhesive labels when the adsorbable sheet (i) is used, the support layer (ii), until the removal thereof, serves to keep the electrostatic adsorbable sheet easy to handle during, for example, processing, while maintaining the high electrostatic adsorption force of the resin film layer (A).

The support layer (ii) may have a single-layer structure or may have a multilayer structure composed of two or more layers. As stated above, the support layer (ii) includes a resin film layer (B) and the surface thereof where the resin film layer (B) is exposed (hereinafter, that surface is referred to as "surface on the resin film layer (B) side") is in contact with the resin film layer (A) and is electrostatically adsorbable, and it is preferred to configure the support layer (ii) so that the opposite surface has antistatic performance. It is therefore preferred to make the support layer (ii) have a multilayer structure.

The support layer (ii) includes a resin film layer (B) having excellent insulating properties which constitutes the surface that is in contact with the resin film layer (A), from the standpoint of reducing movement of charges from the resin film layer (A). In the case where the support layer (ii) is made to have a multilayer structure, a known material such as paper, synthetic paper, a resin film having a different composition, woven fabric, nonwoven fabric, or an antistatic coat layer can be suitably selected and laminated to constitute the other surface from the standpoint of impartation of antistatic performance.

It is also possible to use a method in which that surface of the support layer (ii) which is on the resin film layer (B) side is directly subjected to a charging treatment to impart electrostatic adsorption force thereto and this support layer (ii) is laminated with an untreated resin film layer (A) by the electrostatic adsorption force to obtain an electrostatic adsorbable sheet. In this case, the resin film layer (A) is rendered dielectric by the charges of the support layer (ii) and comes to have electrostatic adsorption force.

It is preferable that the support layer (ii) should have a basis weight in the range of 20-500 g/$m^2$. The basis weight thereof is more preferably in the range of 30-400 g/$m^2$, especially preferably in the range of 40-300 g/$m^2$. The support layer (ii) needs to hold charges in an amount equivalent to that of the charges which the resin film layer (A) holds inside. Consequently, in case where the basis weight of the support layer (ii) is less than 20 g/$m^2$, this layer (ii) has too low an electrostatic capacity and charges are prone to be released therefrom, rendering the adsorbable sheet (i) prone to fall from the adherend. Conversely, in case where the basis weight thereof exceeds 500 g/$m^2$, the electrostatic adsorbable sheet (iii) has too large a weight and tends to be difficult to handle, although this support layer (ii) is sufficient from the standpoint of electrostatic capacity.

[Resin Film Layer (B)]

Resins usable for the resin film layer (B) which constitutes the support layer (ii) are not particularly limited in kind, so long as the resins are dielectrics, have insulating properties, and are capable of holding charges inside. Examples of such resins hence include the thermoplastic resins shown above as examples with regard to the resin film layer (A) described above, i.e., polyolefin resins such as high-density polyethylene, medium-density polyethylene, low-density polyethylene, propylene-based resins, and poly(methyl-1-pentene), functional-group-containing polyolefin resins such as ethylene/vinyl acetate copolymers, ethylene/acrylic acid copolymers, maleic-acid-modified polyethylene, and maleic-acid-modified polypropylene, polyamide resins such as nylon-6 and nylon-6,6, thermoplastic polyester resins including poly(ethylene terephthalate), copolymers thereof, and poly(butylene terephthalate) or aliphatic polyesters such as poly(butylene succinate) and poly(lactic acid), and polycarbonates, atactic polystyrene, and syndiotactic polystyrene, and further include thermosetting resins such as phenolic resins, melamine resins, urea resins, urethane resins, epoxy resins, and unsaturated polyester resins.

Polyolefin resins, functional-group-containing polyolefin resins, polyamide resins, thermoplastic polyester resins, and the like, which have excellent processability, are more preferred for use among those resins. It is especially preferred to use polyolefin resins.

The resin film layer (B) in the support layer (ii) serves to confine the charges held by the resin film layer (A) of the adsorbable sheet (i), so as to prevent the charges from getting away to the outside. This ability to confine charges can be expressed in terms of relative permittivity. The relative permittivity of the resin film layer (B) is in the range of preferably 1.1-5.0, more preferably 1.2-4.0, even more preferably 1.5-3.0. In case where the relative permittivity of the resin film layer (B) exceeds 5.0, there is a tendency that the resin film layer (A) cannot hold the charges over a long period and the electrostatic adsorption force of the adsorbable sheet (i) is prone to decrease. Meanwhile, the resin film layer (B) having a relative permittivity less than 1.1 should pose no problem concerning performance. However, since this relative permittivity is lower than the relative permittivity of air (vacuum), such a material is not easily available in view of the current technology.

Such a relative permittivity within the desired range can be attained by configuring the resin film layer (B) from the resin described above or by performing, for example, processing for forming voids inside.

The higher the surface resistivity of that surface of the support layer (ii) which is on the resin film layer (B) side, the more the support layer (ii) is preferred like the resin film layer (A) from the standpoint of reducing charge movement. Specifically, it is preferable that the surface resistivity of that surface of the support layer (ii) which is on the resin film layer (B) side should be in the range of $1\times10^{13}$-$9\times10^{17}$ Q. The surface resistivity thereof is more preferably in the range of $5\times10^{13}$-$9\times10^{16}$ $\Omega$, even more preferably in the range of $1\times10^{14}$-$9\times10^{15}$ $\Omega$. In case where the surface resistivity thereof is less than $1\times10^{13}$ $\Omega$, the charges of the resin film layer (A) are prone to get away to the outside along the surface and there is a tendency that the resin film layer (A) cannot hold the charges over a long period and the electrostatic adsorption force of the adsorbable sheet (i) is prone to decrease. Meanwhile, the support layer (ii) having a surface resistivity exceeding $9\times10^{17}$ $\Omega$ should pose no problem concerning performance. However, it is difficult to form a surface having such high insulating properties using any currently known substance and, even when obtainable, this surface is costly. This configuration is hence difficult to implement.

Meanwhile, it is preferable that the other surface of the support layer (ii) should have antistatic performance from the standpoint of making the electrostatic adsorbable sheet (iii) have enhanced handleability. Examples of methods for imparting antistatic performance to the support layer (ii) include: a method in which a resin film into which an antistatic agent has been incorporated is used as the material for the resin film layer (B) that constitutes the support layer (ii); a method in which the coat layer (L) which will be described later is formed; a method in which a conductive coating material is applied to form a conductive layer; a method in which a thin metal film is formed by direct vacuum deposition, transfer vacuum deposition, laminating of a vacuum-deposited film, etc.; and a method in which a sheet of paper or synthetic paper, resin film, woven fabric, or nonwoven fabric which has undergone an antistatic treatment or a resin film into which an antistatic agent has been incorporated is laminated.

In the mode in which a resin film layer into which an antistatic agent has been incorporated is disposed, there are cases where an antistatic effect is produced only when the film surface is subjected to a surface treatment with a corona discharge or a surface treatment with a flame. Especially in stretched films, there are cases where the antistatic effect differs considerably between the treated surface and the untreated surface. This phenomenon can be utilized to form a support layer (ii) which has a single-layer structure but has antistatic performance imparted to one surface thereof, by stretching a thermoplastic resin into which an antistatic agent has been incorporated, using the stretched film as the resin film layer (B), and subjecting one surface thereof to a surface treatment with, for example, a corona discharge.

It is preferable that antistatic performance should be imparted to that surface of the support layer (ii) which is not in contact with the resin film layer (A), i.e., the surface of an outer layer of the electrostatic adsorbable sheet (iii), to regulate the surface resistivity thereof to a value in the range of $1\times10^{-1}$-$9\times10^{12}$ Ω. It is more preferable that the surface resistivity thereof should be regulated to a value in the range of $1\times10^{0}$-$9\times10^{12}$ Ω. In case where the surface resistivity of that surface of the support layer (ii) which is not in contact with the resin film layer (A) exceeds $9\times10^{12}$ Ω, the antistatic performance is insufficient and this electrostatic adsorbable sheet (iii) is prone to arouse troubles, such as adhesion to the periphery and adhesion to itself, and has poor handleability. Hence, the desired performance according to the present invention tends to be difficult to obtain. Meanwhile, the support layer (ii) in which that surface has a surface resistivity less than $1\times10^{-1}$ Ω should pose no problem concerning the performance of the electrostatic adsorbable sheet. However, it is difficult to form a surface having such high conductivity using any currently known substance and, even when obtainable, this surface is costly. This configuration is hence difficult to implement.

[Adsorbable Sheet (iv)]

An electrostatic adsorbable sheet (iii) of the present invention may be one in which the adsorbable sheet (i) and an adsorbable sheet (iv) have been laminated with each other by electrostatic adsorption. In this configuration, the adsorbable sheet (iv) includes a resin film layer (B) like the support layer (ii), but has an adhesive layer (D) disposed on one surface of the resin film layer (B). Consequently, the electrostatic adsorbable sheet according to this aspect includes the multilayer structure: adhesive layer (C)/resin film layer (A)/resin film layer (B)/adhesive layer (D) (see Fig. 18).

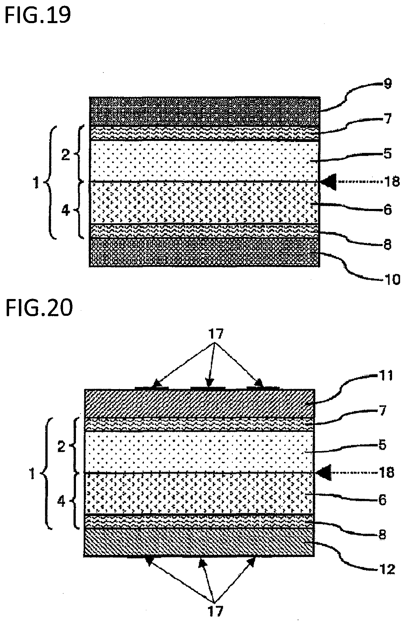

As shown in Fig. 20, printed matters or the like which have no pressure-sensitive adhesiveness (printed sheet layer (G) 11 and printed sheet layer (H) 12) can be applied respectively to both surfaces of the electrostatic adsorbable sheet according to this aspect by means of the adhesive layer (C) 7 and the adhesive layer (D) 8 on both sides. Thereafter, this sheet is separated at the interface between the resin film layer (A) 5 and the resin film layer (B) 6 which are adherend to each other by electrostatic adsorption, into the adsorbable sheet (i) having the printed sheet layer (G) adherent thereto and the adsorbable sheet (iv) having the printed sheet layer (H) adherent thereto, respectively as display materials. Thus, two display materials are obtained from one electrostatic adsorbable sheet. According to this aspect, the support layer (ii) in the embodiments described above, which is removed and discarded like the release paper of pressure-sensitive adhesive labels when the adsorbable sheet (i) is used, can be effectively utilized. In addition, since two display materials are obtained from one electrostatic adsorbable sheet, this aspect further produces, for example, the effect of reducing transportation cost.

[Adhesive Layer (D)]

In the present invention, the adhesive layer (D) is a constituent component of the adsorbable sheet (iv) and, owing to the pressure-sensitive adhesive force thereof, bonds the resin film layer (B) to a printed matter having no pressure-sensitive adhesiveness (printed sheet layer (H)).

The adhesive layer (D) is formed by forming a layer of a pressure-sensitive adhesive on one surface of the resin film layer (B) or by disposing a layer-shaped pressure-sensitive adhesive on one surface of the resin film layer (B). The kind of pressure-sensitive adhesive and the thickness (application amount) thereof can be variously selected in accordance with the atmosphere in which the display material is to be used, adhesion strength, etc.

As this pressure-sensitive adhesive, use can be made of one which has the same composition as the pressure-sensitive adhesive described above with regard to the adhesive layer (C). A layer of the pressure-sensitive adhesive can be disposed by the same method as described above in the same basis weight (application amount) as shown above. The kind of the pressure-sensitive adhesive to be used for forming the adhesive layer (D), the method for forming a layer thereof, and the basis weight (application amount) thereof may be the same as or different from those used for the adhesive layer (C).

[Coat Layer (K)]

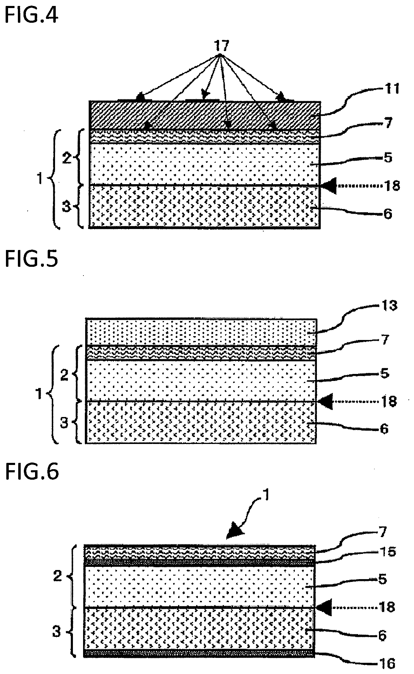

It is preferable that a coat layer (K) should be disposed on the resin film layer (A) as a constituent component of an electrostatic adsorbable sheet (iii) of the present invention, for the purpose of imparting antistatic performance to one surface thereof. As shown in Fig. 6, the adhesive layer (C) 7 of the adsorbable sheet (i) 2 in this case is disposed on the coat layer (K) 15.

For example, the following method may be used. A resin film layer (A) 5 which has a coat layer (K) 15 disposed on one surface thereof is used, and that surface thereof which is on the resin film layer (A) side is subjected to a charging treatment. Subsequently, a resin film layer (B) 6 having a coat layer (L) 16 disposed on one surface thereof is laminated with the layer (A) 5 so that the treated surface is bonded to the surface of the layer (B) 6 by electrostatic adsorption, thereby temporarily producing a laminate of the two. Next, an adhesive layer (C) 7 is disposed on the coat layer (K) 15 of the resin film layer (A) 5. Thus, an electrostatic adsorbable sheet (iii) 1 of the present invention is obtained. In the laminate, both surfaces thereof have antistatic performance due to the coat layers, and internal charges are not released to the outside. Consequently, this laminate is less apt to arouse troubles, such as adhesion to the apparatus, in the succeeding step of disposing an adhesive layer (C), and is exceedingly easy to handle.

The coat layer (K) is used in order to impart antistatic performance to the resin film layer (A). It is preferable that the coat layer (K) should have a composition which includes 0.1-100% by weight of antistatic agent, 0-99.9% by weight of polymeric binder, and 0-70% by weight of pigment particles. The coat layer (K) can be disposed by directly applying a coating material containing these ingredients to the resin film layer (A) or by applying the coating material to another film to form a coat layer (K) beforehand and laminating this layer to the resin film layer (A).

The antistatic agent is added in order to impart antistatic performance to the coat layer (K). Examples thereof include: low-molecular-weight organic compound type antistatic agents represented by stearic acid monoglyceride, alkyldiethanolamines, sorbitan monolaurate, alkylbenzenesulfonic acid salts, and alkyl(diphenyl ether)sulfonic acid salts; conductive inorganic fillers represented by ITO (indium-doped tin oxide), ATO (antimony-doped tin oxide), and graphite whiskers; so-called electronically conductive polymers which exhibit electrical conductivity by the action of the $\pi$-electrons within the molecular chain, such as polythiophene, polypyrrole, and polyaniline; antistatic agents based on nonionic polymers, such as polyethylene glycol and polyoxyethylenediamine; quaternary ammonium salt type copolymers such as poly(vinylbenzyltrimethylammonium chloride) and quaternized poly(dimethylaminoethyl methacrylate); and polymers having antistatic function which are represented by alkali-metal-salt-containing polymers such as polymers which contain alkylene oxide groups and/or hydroxyl groups and to which alkali metal ions have been added.

These antistatic agents respectively have their own properties. For example, the low-molecular-weight organic compound type antistatic agents have a feature wherein the antistatic performance is considerably affected by ambient humidity and the antistatic agents are prone to bleed out to the outermost surface. There are cases where the bleeding-out of an antistatic agent reduces the electrostatic adsorption force of the resin film layer (A). There also are cases where the antistatic agent which has bled out is transferred to a surface of another film to undesirably impart antistatic performance, resulting in a resin film layer (A) which does not have stable electrostatic adsorption force.

The conductive inorganic fillers have a drawback that there are cases where a sufficient antistatic effect is not obtained with a small addition amount thereof because the filler particles do not in contact with one another. Furthermore, in cases when a conductive inorganic filler is added in such an amount that the filler particles are in contact with one another, the binder amount is considerably reduced and, hence, there are cases where the coat layer (K) has reduced cohesive force, resulting in a decrease in the strength of adhesion to the resin film layer (A) or a decrease in the interlaminar strength of the adsorbable sheet (i).

The electronically conductive polymers generally have a black, green, or bluish-gray color due to the coloration attributable to the conjugated system. Although use thereof produces an excellent antistatic effect, the resulting resin film layer (A) has a dull color, which reduces the transparency of the layer. There are hence cases where this resin film layer (A) is unsuitable for displaying printed matters.

The polymers having antistatic function show stable antistatic performance, are less apt to be transferred to the surfaces of other films, and cause little coloration. These polymers are hence preferred as an antistatic agent for constituting the coat layer (K) to be used in the electrostatic adsorbable sheet (iii) of the present invention. In particular, a copolymer of the quaternary ammonium salt type and a polymer containing an alkali metal salt are more preferred because these polymers have satisfactory antistatic performance and because the antistatic performance thereof is affected little by ambient humidity.

The coat layer (K) may contain a polymeric binder according to need. The polymeric binder can bring about, owing to the cohesive force thereof, satisfactory adhesion between the coat layer (K) and the resin film layer (A) on which the coat layer (K) is disposed.

Examples of the polymeric binder include: polyethyleneimine-based polymers such as polyethyleneimine, polyethyleneimines modified with alkyls having 1-12 carbon atoms, poly(ethyleneimine-urea)s, ethyleneimine adducts of poly(ethyleneimine-urea)s, polyamine-polyamides, ethyleneimine adducts of polyamine-polyamides, and epichlorohydrin adducts of polyamine-polyamides; acrylic-ester-based polymers such as acrylic ester copolymers, methacrylic ester copolymers, acrylamide/acrylic ester copolymers, acrylamide/acrylic ester/methacrylic ester copolymers, derivatives of polyacrylamide, and acrylic ester polymers containing oxazoline groups; and polyvinylpyrrolidone and polyethylene glycol. Examples thereof further include vinyl acetate resins, urethane resins, polyether resins, polyester resins, urea resins, terpene resins, petroleum resins, ethylene/vinyl acetate copolymers, vinyl chloride resins, vinyl chloride/vinyl acetate copolymer resins, vinylidene chloride resins, vinyl chloride/vinylidene chloride copolymer resins, chlorinated ethylene resins, chlorinated propylene resins, butyral resins, silicone resins, nitrocellulose resins, styrene/acrylic copolymer resins, styrene/butadiene copolymer resins, and acrylonitrile/butadiene copolymer resins.

Any one of these polymeric binders may be used alone, or two or more thereof may be used as a mixture thereof. Those polymeric binders can be used as a dilution with or dispersion in an organic solvent or water. Preferred of those polymers are polyethyleneimine-based polymers, urethane resins such as polyether urethanes, polyester polyurethanes, and acrylic urethanes, or acrylic ester copolymers. This is because these polymers have a good affinity (compatibility) for the polymers having antistatic function and, when mixed therewith, give a coating material which is stable and easy to apply.

The coat layer (K) may contain pigment particles, but need not contain pigment particles. Addition of pigment particles to the coat layer (K) can attain improvements in performance, e.g., blocking prevention due to impartation of surface irregularities to the coat layer (K) formed, and can attain, as an ultraviolet-reflective material, impartation of performances such as light resistance and weatherability. Pigment particles are suitably selected and used while taking account of these desired performances, and are added according to need.

As the pigment particles, known organic or inorganic fine particles can be used. Specific usable examples thereof include silicon oxide, calcium carbonate, calcined clay, titanium oxide, zinc oxide, barium sulfate, diatomaceous earth, acrylic particles, styrene particles, polyethylene particles, and polypropylene particles. The particle diameter of the pigment particles is preferably 20 μm or less, more preferably 15 μm or less, even more preferably 3 μm or less. In case where the particle diameter of the pigment particles exceeds 20 μm, the pigment particles are prone to shed from the coat layer (K) formed, resulting in dusting. The content of pigment particles in the coat layer (K) is preferably 0-70% by weight, more preferably 0-60% by weigh, even more preferably 0-50% by weight. In case where the content of pigment particles exceeds 70% by weight, the amount of the binder resin is relatively insufficient and the coat layer (K) has insufficient cohesive force and has reduced strength of adhesion to the resin film layer (A), resulting in a tendency that not only the adhesive layer (C) but also a printed matter having no pressure-sensitive adhesiveness (printed sheet layer (G)) or resin film including a fluororesin (protective layer (I)) are prone to peel off the resin film layer (A).

The coat layer (K) can be formed as a coating layer by preparing a coating fluid which contains the ingredients shown above, applying the coating fluid to the resin film layer (A), and drying and solidifying the coating fluid applied. For the application, conventionally known techniques and devices can be utilized.

The coat layer (K) can be disposed also by laminating to the resin film layer (A). In this case, use may be made of a method in which a film having a coat layer (K) formed thereon beforehand is produced and this coat layer (K) is laminated to the resin film layer (A). The laminating can be, for example, a technique such as ordinary dry laminating or melt laminating.

It is preferable that the disposition of the coat layer (K) on the resin film layer (A) should be conducted before the charging treatment which will be described later is performed. Owing to the antistatic performance of the coat layer (K), it is possible to inhibit the electrostatic adsorbable sheet (iii) from exerting the electrostatic adsorption force on the outside even after the charging treatment.

The coat layer (K) serves to impart antistatic performance to one surface of the resin film layer (A). Specifically, the surface resistivity of the surface of the coat layer (K) is regulated to a value in the range of $1\times10^{-1}$-$9\times10^{12}$ Ω, preferably $1\times10^{3}$-$9\times10^{11}$ Ω, more preferably $1\times10^{6}$-$9\times10^{10}$ Ω.

In case where the surface resistivity of the coat layer (K) exceeds $9\times10^{12}$ Ω, the electrostatic adsorption force possessed by the electrostatic adsorbable laminate or electrostatic adsorbable sheet cannot be sufficiently inhibited, resulting in a tendency that during laminating of the electrostatic adsorbable laminate with another one, troubles are prone to arise, such as adhesion to the rolls and adhesion of the sheets to each other. Namely, there is a tendency that troubles such as adhesion of electrostatic adsorbable sheets to each other are apt to arise. Meanwhile, the electrostatic adsorbable sheet (iii) which has a coat layer (K) having such high conductivity that the surface resistivity thereof is less than $1\times10^{-1}$ Ω should pose no problem concerning performance. However, it is technically difficult to form a surface having such high conductivity using any currently known substance and, even when obtainable, this surface is costly and is hence not practicable. Such a surface may have the possibility of impairing the electrostatic adsorption force of the resin film layer (A).

The basis weight (application amount) of the coat layer (K), in terms of solid amount, is preferably 0.01-50 g/m$^2$, more preferably 0.05-30 g/m$^2$, even more preferably 0.1-10 g/m$^2$, especially preferably 0.3-8 g/m$^2$. In case where the basis weight thereof is less than 0.01 g/m$^2$, it is difficult to maintain the evenness of the coat layer (K) and there are cases where stable antistatic performance is not obtained. Meanwhile, in case where the basis weight thereof exceeds 50 g/m$^2$, disposition of this coat layer (K) on the resin film layer (A) tends to impair the electrostatic adsorption force and light transmittance of the resin film layer (A). In addition, the resin film layer (A) has an increased weight and tends to peel off since the weight thereof cannot be held by the electrostatic adsorption force thereof. There also is a possibility that the force of electrostatic adsorption between the resin film layer (A) and the support layer (ii) might be prone to decrease.

[Coat Layer (L)]

It is preferable that a coat layer (L) should be disposed on one surface of the resin film layer (B) as a constituent component of an electrostatic adsorbable sheet (iii) of the present invention for the purpose of imparting antistatic performance. In the case of disposing a coat layer (L) on the adsorbable sheet (iv), the adhesive layer (D) is disposed on the coat layer (L).

For forming this coat layer (L), a coating material having the same composition as described above with regard to the coat layer (K) can be applied using the same technique. The coat layer (L) having the same thickness can be used. The composition, method of layer superposition, and basis weight (application amount) to be used for the coat layer (L) may be the same as or different from those for the coat layer (K).

[Printed Image]

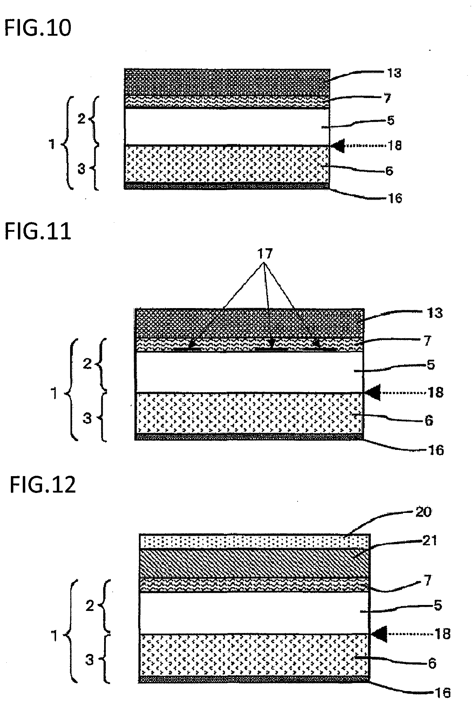

A printed image 17 can be disposed on the resin film layer (A) as a constituent component of each electrostatic adsorbable sheet (iii) of the present invention using a known printing technique. In this case, the adhesive layer (C) 7 of the adsorbable sheet (i) 2 is disposed on the printed image as shown in Figs. 11, 13, and 15-17.

Likewise, a printed image can be disposed also on the resin film layer (B) as a constituent component of each electrostatic adsorbable sheet (iii) of the present invention using a known printing technique. In this case, the adhesive layer (D) of the adsorbable sheet (iv) is disposed on the printed image.

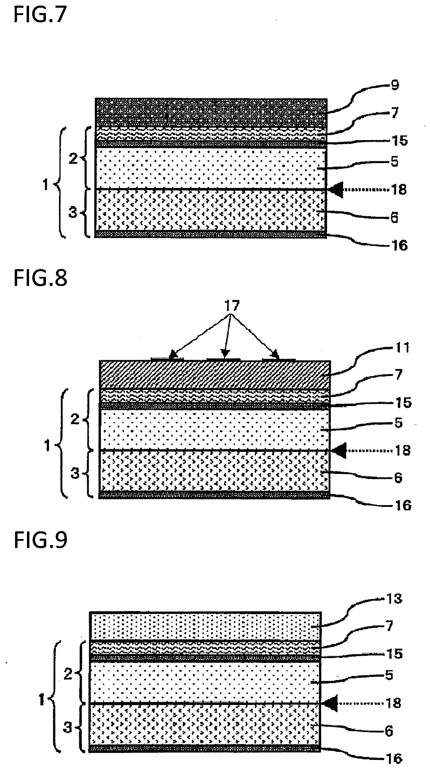

Furthermore, a printed image 17 can be disposed, using a known printing technique, on the printed sheet layer (G) 11 and printed sheet layer (H) 12 which will be described later. In this case, the printed image 17 on the printed sheet layer (11 or 12) may be disposed on one surface or on each surface of the sheet layer (see Figs. 8, 20, 24, and 27).

As techniques for the printing, use can be made of conventionally known techniques such as offset printing, gravure printing, flexographic printing, letterpress printing, screen printing, ink-jet recording, thermal recording, thermal transfer recording, and electrophotographic recording. However, offset printing and ink-jet recording are preferred, in which changes in design or size are easy. Usable printing inks are oil-based inks, water-based inks, and UV inks. However, UV inks, which have a high drying rate, are preferred.

[Release Sheet Layer (E)]

An electrostatic adsorbable sheet (iii) of the present invention may further have a release sheet layer (E) 9 disposed on the surface of the adhesive layer (C) 7 (see Figs. 2, 7, 19, and 23). The release sheet layer (E) is disposed in order to cover the adhesive layer (C) so as to prevent the adhesive layer (C) from exerting the pressure-sensitive adhesive force on the outside, until the printed sheet layer (G) or protective layer (I), which will be described later, is disposed on the adhesive layer (C). Consequently, when the printed sheet layer (G) is disposed on the adhesive layer (C), the release sheet layer (E) is stripped off and removed like the release paper of ordinary pressure-sensitive adhesive labels.

As the release sheet layer (E), use can be made of a sheet which is common as release paper. For example, use can be made of: wood-free paper or kraft paper as such; the paper which has undergone calendering; the paper which has been coated with a resin; the paper to which a plastic film has been laminated; or coat paper, glassine paper, plastic film, or the like which has undergone a silicone treatment or a fluorochemical treatment.

More specifically, use can be made of: a sheet obtained by laminating a film of a plastic, such as a polyolefin resin, e.g., polyethylene or polypropylene, a polyester resin, e.g., poly(ethylene terephthalate), or a polyamide resin, e.g., a nylon, to one or each surface of natural-pulp paper, e.g., wood-free paper or kraft paper; a sheet obtained by subjecting the paper to a silicone treatment; a sheet obtained by subjecting, for example, a film of a plastic such as a polyolefin resin, e.g., polyethylene or polypropylene, or a polyester resin, e.g., poly(ethylene terephthalate), to a silicone treatment; or the like.

[Release Sheet Layer (F)]

In the case where an electrostatic adsorbable sheet (iii) of the present invention has an adhesive layer (D), a release sheet layer (F) 10 may be further disposed on the surface of the adhesive layer (D) 8 (see Figs. 19, 21, and 23). The release sheet layer (F) is disposed in order to cover the adhesive layer (D) so as to prevent the adhesive layer (D) from exerting the pressure-sensitive adhesive force on the outside, until the printed sheet layer (H), which will be described later, is disposed on the adhesive layer (D). Consequently, when the printed sheet layer (H) is disposed on the adhesive layer (D), the release sheet layer (F) is stripped off and removed like the release paper of ordinary pressure-sensitive adhesive labels.

As this release sheet layer (F), the same sheet materials as those described above with regard to the release sheet layer (E) can be used. The release sheet layer (F) to be used in the electrostatic adsorbable sheet (iii) of the present invention may be the same as or different from the release sheet layer (E).

[Printed Sheet Layer (G)]

The electrostatic adsorbable sheets (iii) of the present invention each may further have a printed sheet layer (G) 11 disposed on the surface of the adhesive layer (C) 7 (see Figs. 3, 4, 8, 20, 21, and 24). The term "printed sheet layer (G)" herein means a printed matter having no pressure-sensitive adhesiveness.

The laminate which is obtained by removing the support layer (ii) or the adsorbable sheet (iv) from the electrostatic adsorbable sheet (iii) including the printed sheet layer (G) and which is configured of the printed sheet layer (G) and the adsorbable sheet (i) is applicable as a display material to adherends.

As the printed sheet layer (G), use can be made of various common sheets which are usually available as printed matters. Examples thereof include printed matters obtained by printing one or both surfaces of natural-pulp paper such as wood-free paper or kraft paper, synthetic paper, or a film of a plastic such as a polyolefin resin, e.g., polyethylene or polypropylene, a polyester resin, e.g., poly(ethylene terephthalate), or a polyamide resin, e.g., a nylon, by a conventionally known technique such as offset printing, gravure printing, flexographic printing, letterpress printing, screen printing, ink-jet printing, thermal recording/printing, thermal transfer printing, or electrophotographic printing.

[Printed Sheet Layer (H)]

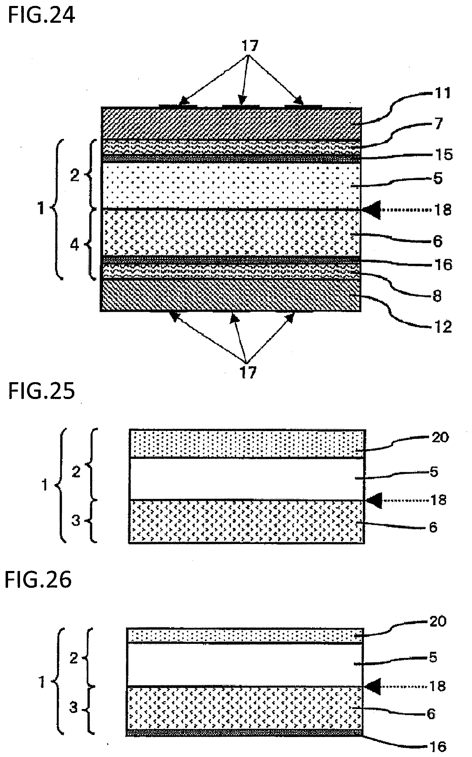

In the case where an electrostatic adsorbable sheet (iii) of the present invention has an adhesive layer (D), a printed sheet layer (H) 12 may be further disposed on the surface of the adhesive layer (D) (see Figs. 20 and 24). The term "printed sheet layer (H)" herein also means a printed matter having no pressure-sensitive adhesiveness.

The laminate which is obtained by removing the adsorbable sheet (i) from the electrostatic adsorbable sheet (iii) including the printed sheet layer (H) and which is configured of the printed sheet layer (H) and the adsorbable sheet (iv) is applicable as a display material to adherends.

As this printed sheet layer (H), the same printed matters as those described above with regard to the printed sheet layer (G) can be used. The printed sheet layer (H) to be used in the electrostatic adsorbable sheet (iii) of the present invention may be the same as or different from the printed sheet layer (G).

It is preferable that the printed sheet layer (G) and the printed sheet layer (H) each should have a basis weight in the range of 20-500 g/m$^2$. The basis weight thereof is more preferably in the range of 30-400 g/m$^2$, especially preferably in the range of 40-300 g/m$^2$. In case where the printed sheet layer (G) and the printed sheet layer (H) each have a basis weight exceeding 500 g/m$^2$, the laminate has too large an own weight and tends to fall from the adherend since the weight thereof cannot be held by the electrostatic adsorption force of the adsorbable sheet (i). Meanwhile, in case where the basis weight thereof is less than 20 g/m$^2$, the operation for laminating the printed sheet layer (G) and the printed sheet layer (H) to the adsorbable sheet (i) tends to be difficult since these layers have poor stiffness.

[Protective Layer (I)]

The electrostatic adsorbable sheets (iii) of the present invention may further have a protective layer (I) 13 disposed on the surface of the adhesive layer (C) 7 (see Figs. 5, 9-11, and 22). The term "protective layer (I)" herein means a resin film including a fluororesin.

The protective layer (I) in the present invention is disposed in order to prevent the resin film layer (A) and a printed image given to the resin film layer (A) from suffering scratches and to enhance the erasability of characters and signs written with an erasable pen such as a writing utensil for exclusive use (e.g., whiteboard marker).

It is preferable that the protective layer (I) should be formed from a thermoplastic resin film or from a resin film which includes a fluororesin coat layer.

As the thermoplastic resin film for forming the protective layer (I), use can be made, for example, of: fluororesins such as polytetrafluoroethylene, ethylene/tetrafluoroethylene copolymers, tetrafluoroethylene/hexafluoropropylene copolymers, tetrafluoroethylene/perfluoroalkyl vinyl ether copolymers, and poly(vinylidene fluoride); polyolefin resins such as high-density polyethylene, medium-density polyethylene, low-density polyethylene, propylene-based resins, and poly(methyl-1-pentene); functional-group-containing polyolefin resins such as ethylene/vinyl acetate copolymers, ethylene/acrylic acid copolymers, maleic-acid-modified polyethylene, and maleic-acid-modified polypropylene; polyamide resins such as nylon-6 and nylon-6,6; thermoplastic polyester resins such as poly(ethylene terephthalate), copolymers thereof, poly(butylene terephthalate), or aliphatic polyesters such as poly(butylene succinate) and poly(lactic acid); and polycarbonates, atactic polystyrene, and syndiotactic polystyrene. Preferred of these thermoplastic resins are fluororesins, polyolefin resins, functional-group-containing polyolefin resins, and thermoplastic polyester resins, which are excellent in terms of transparency, nonfouling property, and abrasion resistance.

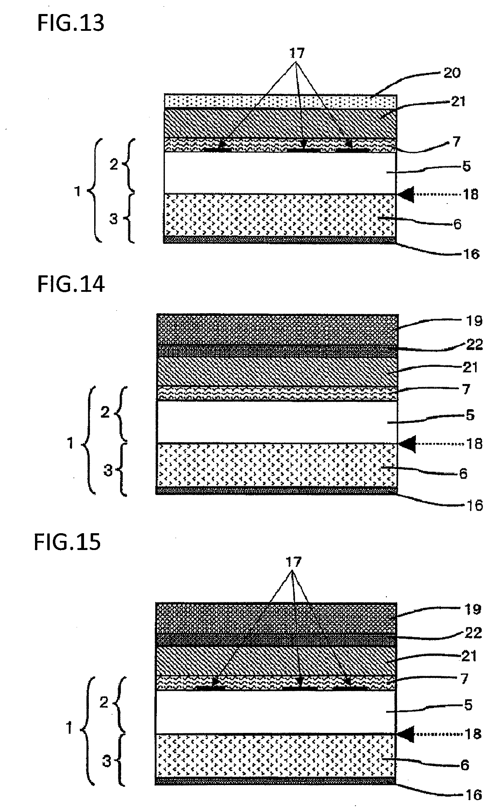

Especially in the case where the coat layer which will be described later is not disposed, it is more preferable that a fluororesin film 19, which attains excellent written-image erasability, should be used as the protective layer (I) or that a fluororesin film 19 should be used as an outermost layer of the protective layer (I), as shown in Figs. 14 and 15 and Fig. 19.

The fluororesin film according to the present invention can be a commercial product. Examples thereof include Neoflon ETFE, Neoflon PFA, Neoflon FEP, Neoflon PCTFE (trade names; manufactured by Daikin Industries, Ltd.), and Aflex (trade name; manufactured by Asahi Glass Co., Ltd.).

The protective layer (I) may be a layer which includes a resin coat layer. It is desirable that this resin coat layer should be a fluororesin coat layer 20 including a fluororesin, from the standpoint of written-image erasability, as shown in Figs. 12, 13, and 16. It is desirable that the fluororesin should be a polymer of a fluorine-containing, ethylenically unsaturated monomer, such as a fluoroolefin or an ethylenically unsaturated monomer containing a fluoroalkyl group, or a copolymer of the fluorine-containing, ethylenically unsaturated monomer with a monomer copolymerizable therewith.

Especially representative examples of the fluoroolefin are chlorotrifluoroethylene (CTFE), tetrafluoroethylene (TFE), hexafluoropropylene (HFP), vinylidene fluoride (VdF), vinyl fluoride (VF), and the like.

Especially representative examples of the ethylenically unsaturated monomer containing a fluoroalkyl group include the following.

$CF_3(CF_2)_5CH_2CH_2OCOC(CH_3)=CH_2$

$CF_3(CF_2)_5CH_2CH_2OCOCH=CH_2$

$CF_3(CF_2)_7SO_2N(CH_3)CH_2CH_2OCOCH=CH_2$

$CF_3(CF_2)_7SO_2N(CH_3)CH_2CH_2OCOC(CH_3)=CH_2$

$CF_3(CF_2)_7SO_2N(CH_2CH_2OCOCH=CH_2)_2$

$CF_3(CF_2)_5CH_2CH_2OCOCH=CH_2$

$CF_3(CF_2)_9(CH_2)_9OCOCH=CH_2$

$(CF_3)_2CF(CF_2)_7CH_2CH_2OCOCH=CH_2$

$CF_3(CF_2)_9OCOCH=CH_2$

$CF_3(CF_2)_7CON(CH_3)CH_2CH_2OCOC(CH_3)=CH_2$

$CF_3(CF_2)_5CON(C_3H_7)CH_2CH_2OCOCH=CH_2$

$CF_3(CF_2)_5CH=CH_2$

$CF_3(CF_2)_7CH=CH_2$

$CF(CF_3)(CClF_2)(CF_2)_7CONHOCOCH=CH_2$

Examples of the monomer copolymerizable with the fluorine-containing, ethylenically unsaturated monomer include olefins, carboxylic acid vinyl esters, aralkyl vinyl ethers, alkyl vinyl ethers, cycloalkyl vinyl ethers, and (meth)acrylic acid esters. Especially representative specific examples thereof are ethylene, propylene, butylene, butadiene, isoprene, chloroprene, vinyl chloride, vinylidene chloride, styrene, α-methylstyrene, vinyl acetate, vinyl propionate, vinyl butyrate, vinyl pivalate, vinyl caproate, vinyl laurate, vinyl stearate, vinyl benzoate, vinyl butylbenzoate, vinyl cyclohexanecarboxylate, acrylic acid, methacrylic acid, methyl (meth)acrylate, ethyl (meth)acrylate, butyl (meth)acrylate, hexyl (meth)acrylate, octyl (meth)acrylate, 2-ethylhexyl (meth)acrylate, stearyl (meth)acrylate, benzyl (meth)acrylate, cyclohexyl (meth)acrylate, isobornyl (meth)acrylate, dicyclopentenyl (meth)acrylate, (meth)acrylamide, N-methylol(meth)acrylamide, methyl vinyl ether, ethyl vinyl ether, propyl vinyl ether, butyl vinyl ether, cyclopentyl vinyl ether, cyclohexyl vinyl ether, benzyl vinyl ether, and phenyl vinyl ether. These monomers are used either alone or as a mixture thereof.

The fluororesin to be used for forming the fluororesin coat layer according to the present invention can be a commercial product. Examples thereof include Lumiflon LF200, LF800, LF9716, FE4400, LF700F, and LF710F (trade names; manufactured by Asahi Glass Co., Ltd.), Asahi Guard AG-E060, AG-E100, and AG-E400 (trade names; manufactured by Asahi Glass Co., Ltd.), Zeffle GK570, GK580, GK510, SE310, and SE800 (trade names; manufactured by Daikin Industries, Ltd.), Fluonate K702, K704, and K600 (trade names; manufactured by DIC Inc.), and Cefral Coat TBA201 (trade name; manufactured by Central Glass Co., Ltd.).

A crosslinking agent can be added according to need to the fluororesin coat layer according to the present invention. The crosslinking agent is suitably selected in accordance with the properties of the fluororesin used. For example, preferred in the case where the fluororesin has hydroxyl groups is an isocyanate-based hardener, a melamine resin, a silicate compound, a silane compound containing an isocyanate group, or the like. Preferred in the case where the fluororesin has carboxyl groups is an amine type hardener or an epoxy-based hardener. Furthermore, a carbonyl-containing hardener, an epoxy-based hardener, or an acid anhydride-based hardener is preferred in the case where the fluororesin contains amino groups.

With respect to these hardeners also, commercial products can be used, such as, for example, Coronate HX (trade name; manufactured by Nippon Polyurethane Co., Ltd.), Bayhydur XP7063 (trade name; manufactured by Bayer AG), or Bestagon B1530 (trade name; manufactured by Evonic-Degussa GmbH), as an isocyanate-based hardener.

The fluororesin coat layer according to the present invention may contain a binder ingredient for enhancing adhesiveness and an inorganic filler and/or an organic filler for enhancing slip properties or suitability for writing, besides the fluororesin. Examples of the binder ingredient include acrylic-ester-based polymers such as acrylic ester copolymers, methacrylic ester copolymers, acrylamide/acrylic ester copolymers, acrylamide/acrylic ester/methacrylic ester copolymers, derivatives of polyacrylamide, and acrylic ester polymers containing oxazoline groups, polyvinylpyrrolidone, and polyethylene glycol. Examples thereof further include olefin resins, chlorinated olefin resins, maleic-acid-modified olefin resins, vinyl acetate resins, urethane resins, polyether resins, polyester resins, urea resins, terpene resins, petroleum resins, ethylene/vinyl acetate copolymers, vinyl chloride resins, vinyl chloride/vinyl acetate copolymer resins, vinylidene chloride resins, vinyl chloride/vinylidene chloride copolymer resins, chlorinated ethylene resins, chlorinated propylene resins, butyral resins, silicone resins, nitrocellulose resins, styrene/acrylic copolymer resins, styrene/butadiene copolymer resins, and acrylonitrile/butadiene copolymer resins.

Examples of the inorganic filler include calcium carbonate, titanium oxide, barium sulfate, zinc oxide, silica, zeolite, talc, clay, mica, smectite, and glass beads.

Examples of the organic filler include acrylic particles, melamine particles, polyolefin particles, urethane particles, and polytetrafluoroethylene particles.

It is preferable that the fluororesin coat layer according to the present invention should include the fluororesin in an amount of preferably 30-100%, more preferably 50-100%. In case where the content of the fluororesin is less than 30%, there are cases where sufficient written-image erasability is not obtained.

The basis weight of the fluororesin coat layer according to the present invention is in the range of preferably 0.1-30 g/m$^2$, more preferably 0.2-20 g/m$^2$, even more preferably 0.3-10 g/m$^2$. In case where the basis weight of the fluororesin coat layer is less than 0.1 g/m$^2$, there are cases where this fluororesin coat layer has poor evenness in written-image erasability because of thickness fluctuations. Meanwhile, in case where the basis weight thereof exceeds 30 g/m$^2$, there are cases where this fluororesin coat layer has undergone uneven drying or curing or has cracks, and hence does not exhibit the desired performance.

The fluororesin coat layer may be disposed by direct coating-fluid application to the resin film layer (A), or may be disposed by applying a coating fluid beforehand to the thermoplastic resin film described above and laminating the coated film to the resin film layer (A) through an adhesive.

With respect to techniques for the coating-fluid application, the application for adhesive layer formation may be conducted with a die coater, bar coater, comma coater, lip coater, roll coater, rod coater, curtain coater, gravure coater, spray coater, blade coater, reverse-roll coater, air-knife coater, slide hopper, or the like. Thereafter, the coating fluid applied is subjected to smoothing according to need and then to a drying step, thereby forming the fluororesin coat layer.

It is preferable that the protective layer (I) should have a basis weight in the range of 0.1-500 g/m$^2$. The basis weight thereof is more preferably in the range of 0.2-400 g/m$^2$, especially preferably in the range of 0.3-300 g/m$^2$. In case where the basis weight of the protective layer (I) is less than 0.1 g/m$^2$, there are cases where this protective layer (I) has poor evenness in written-image erasability because of thickness fluctuations. Conversely, in case where the basis weight thereof exceeds 500 g/m$^2$, the adsorbable sheet (i) has too large an own weight and is prone to fall from the adherend in this case also.

[Protective Layer (J)]

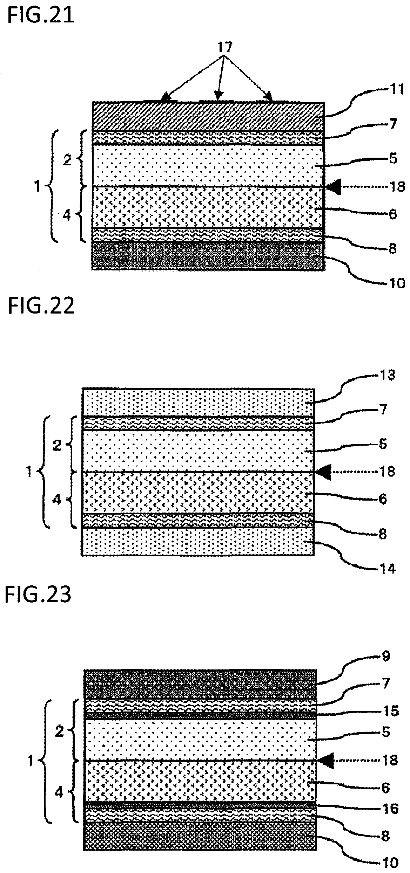

In the case where an electrostatic adsorbable sheet (iii) of the present invention has an adhesive layer (D), a protective layer (J) 14 may be further disposed on the surface of the adhesive layer (D) (see Fig. 22).

The laminate which is obtained by removing the adsorbable sheet (i) from the electrostatic adsorbable sheet (iii) including the protective layer (J) and which is configured of the protective layer (J) and the adsorbable sheet (iv) is applicable as a display material to adherends.

As this protective layer (J), the same materials as those described above with regard to the protective layer (I) can be used. The protective layer (J) to be used in the electrostatic adsorbable sheet (iii) of the present invention may be the same as or different from the protective layer (I).

[Charging Treatment]

The electrostatic adsorbable sheets (iii) of the present invention are obtained by subjecting the surface of the resin film layer (A) of the adsorbable sheet (i) and/or the surface of the resin film layer (B) of the support layer (ii) or adsorbable sheet (iv) to a charging treatment and then laminating the two by electrostatic adsorption force to configure a resin film layer (A)/resin film layer (B) laminate.

The charging treatment is performed in order to inject charges into inner parts of the resin film layer (A) or resin film layer (B) and thereby impart electrostatic adsorption force thereto.

The charging treatment can be conducted by various known methods. Examples of methods for the treatment include: a method in which after a resin film layer has been formed, a corona discharge or a pulsed high voltage is given to a surface of the film layer (electro-electret process); a method in which both surfaces of the film layer are held between dielectrics and a direct-current high voltage is applied to both surfaces (electro-electret process); and a method in which the film layer is irradiated with ionizing radiation such as $\gamma$ rays or electron beams to convert the film layer into an electret (radio-electret process).

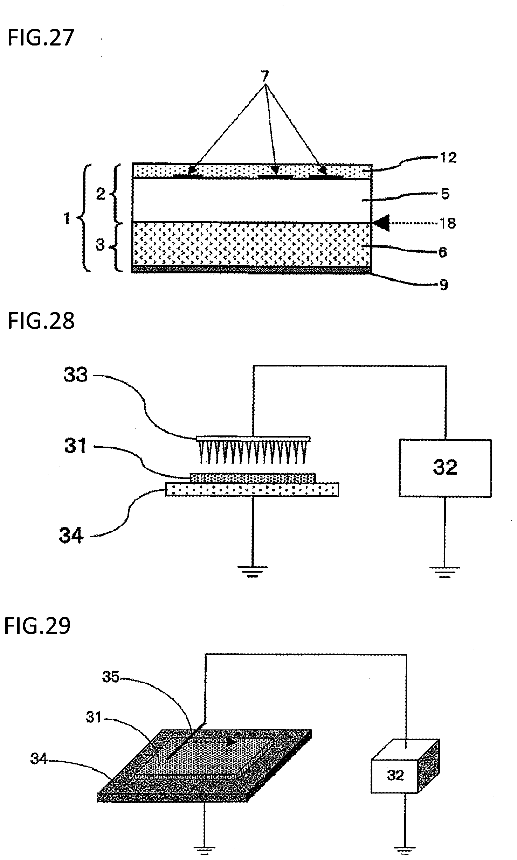

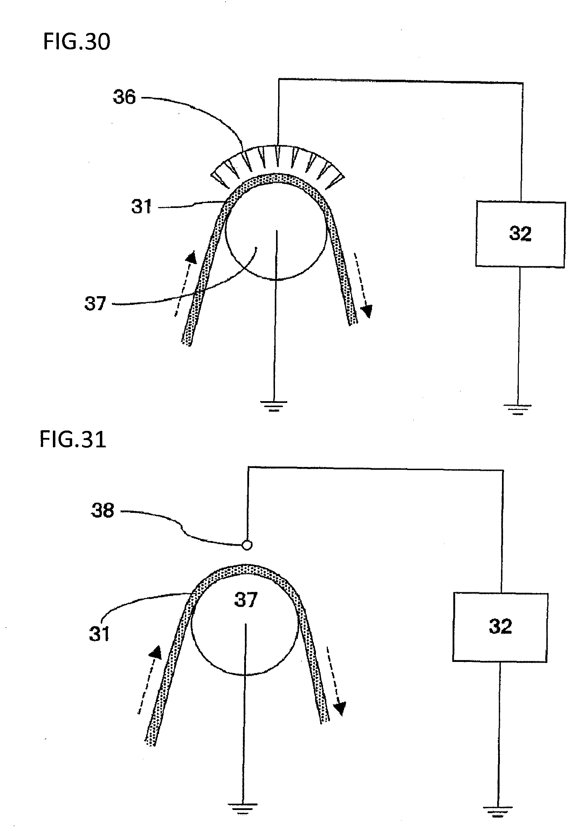

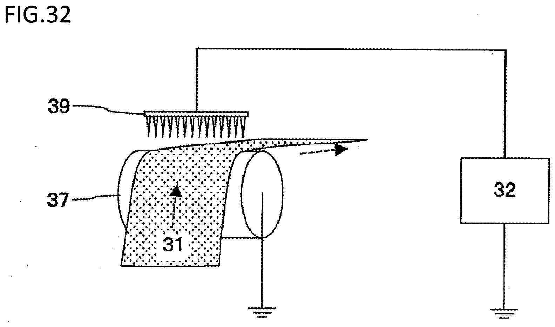

It is preferable that the charging treatment of the resin film layer should be conducted by the methods in which a corona discharge or a high voltage is given (electro-electret process). Preferred examples of the electro-electret process include: a method in which a resin film layer is fixed between an application electrode connected to a direct-current high-voltage power source and a grounding electrode and a voltage is applied thereto (batch method; see Figs. 28 and 29); and a method in which the resin film layer is passed between the electrodes to apply a voltage thereto (continuous method; see Figs. 30, 31, and 32). In the case of employing these techniques, it is desirable that a large number of acicular electrodes disposed at regular intervals or a metal wire should be used as the main electrode (application electrode) and a flat metal plate or a metal roll should be used as the counter electrode (grounding electrode).

In the case where a coat layer (K) has been disposed on one surface of the resin film layer (A) or where a coat layer (L) has been disposed on one surface of the resin film layer (B), a charging treatment with a corona discharge or the like given to the surface of the coat layer is not effective because it is highly probable that the given charges dissipate to the periphery. However, this problem does not especially arise in the case where this surface having antistatic performance is in contact with the grounding side (metal plate or metal roll).

The resin film layer (A) or resin film layer (B) which is a constituent component of an electrostatic adsorbable sheet (iii) of the present invention can be subjected to a charge removal treatment after the charging treatment. By conducting the charge removal treatment, excess charges are removed, making it possible to avoid troubles in processing steps such as a cutting step and a printing step. For the charge removal treatment, known techniques employing a voltage application type charge-removal device (ionizer), self-discharge type charge-removal device, or the like can be used. These charge-removal devices for general use are capable of removing surface charges but are unable to remove the charges accumulated in inner parts of the resin film layer (A) or resin film layer (B). Consequently, the charge removal treatment does not considerably impair the electrostatic adsorption force of the resin film layer (A) or resin film layer (B).

[Display Materials]

The adsorbable sheet (i) as a constituent component of the electrostatic adsorbable sheet (iii) of the present invention can be rendered usable as a display material such as a seal, label, sign, or advertizing leaflet by applying a printed sheet layer (G) to the surface of the adhesive layer (C) thereof.

Furthermore, the adsorbable sheet (i) as a constituent component of the electrostatic adsorbable sheet (iii) of the present invention can be rendered usable as a display material such as a whiteboard by applying a protective layer (I) to the surface of the adhesive layer (C) thereof.

Since these display materials are applicable to adherends by the electrostatic adsorption force of the resin film layer (A), the display materials have an advantage in that even when air bubbles have been trapped between the display material and the adherend, the air can be removed by hand from any direction and the final finished appearance is less apt to have air bubbles. In addition, these display materials have high electrostatic adsorption force during use and the persistence of the electrostatic adsorption force is also sufficient. The display materials can hence be displayed and used on the adherends over a long period, and can be easily separated from the adherends after the use.

Similarly, the adsorbable sheet (iv) which can be a constituent component of an electrostatic adsorbable sheet of the present invention can be rendered usable as a display material by applying a printed sheet layer (H) or a protective layer (J) to the surface of the adhesive layer (D) thereof. This display material also is applicable to adherends by electrostatic adsorption force, without using a pressure-sensitive adhesive or the like, and has an advantage in that the final finished appearance thereof is less apt to have air bubbles. In addition, this display material has high electrostatic adsorption force during use and the persistence of the electrostatic adsorption force is also sufficient. The display material can hence be displayed and used on the adherend over a long period, and can be easily separated from the adherends after the use.

In the case where the surface of the resin film layer (B) of the support layer (ii) or the surface of the coat layer (L) thereof was printed, electrostatic adsorption force remains also in the support layer (ii) which was stripped off when the adsorbable sheet (i) was subjected to use. It is therefore possible to use this support layer (ii) as a display material separately from the adsorbable sheet (i).

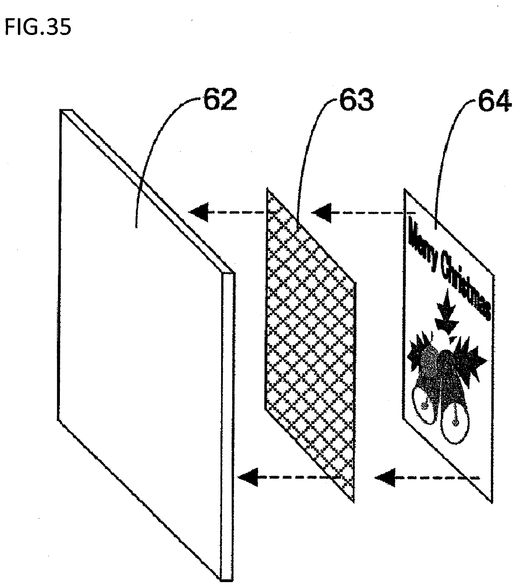

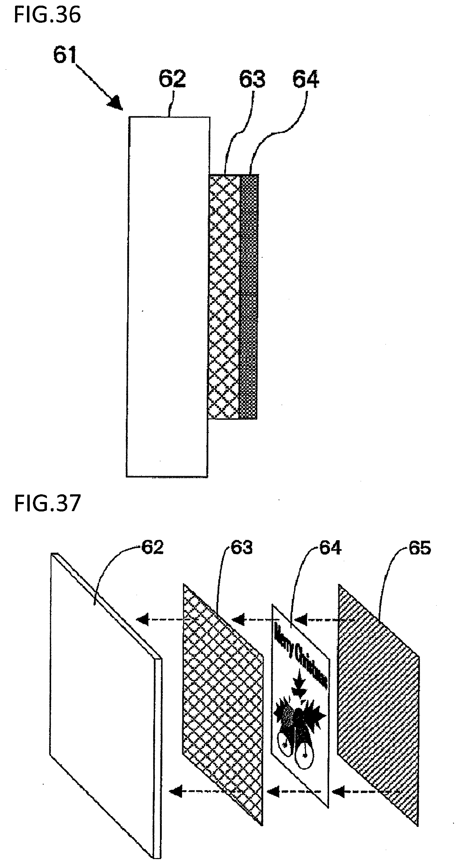

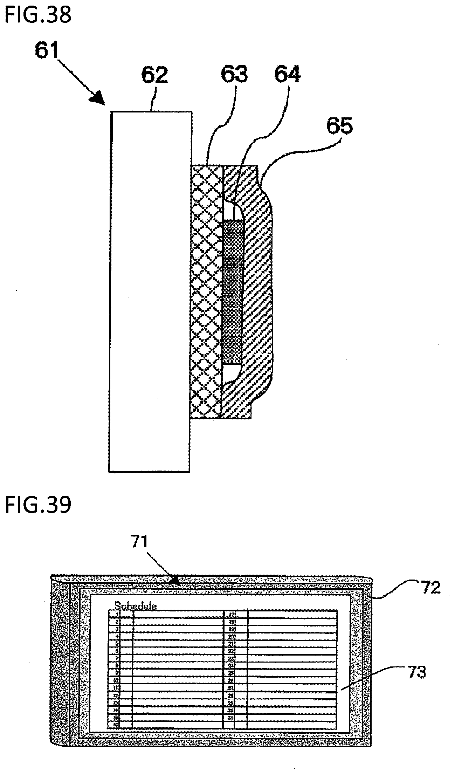

In Figs. 35 to 38, a display material of the present invention is shown as a laminate obtained by laminating an adsorbable sheet 63 (adsorbable sheet (i)) with a printed sheet layer (G) 64 as a printed matter. In these figures, another display material of the present invention is shown as a laminate obtained by bonding a printed sheet layer (G) 64 and an adherend 62 to each other through an adsorbable sheet 63. In the case where an electrostatic adsorbable sheet (iii) of the present invention is configured of an adsorbable sheet 63 and a support layer (ii) 65, the support layer (ii) can be laminated to the surface of a printed sheet layer as a display material with the aid of the electrostatic adsorption force remaining in the support layer (ii), as shown in Fig. 37 and Fig. 38. In this case, the support layer (ii) can be utilized as a layer for protecting the printed sheet layer.

Furthermore, as shown in Fig. 39, a display material of the present invention can be obtained also by applying an adsorbable sheet (i) 73 to an adherend 72, such as a whiteboard, by means of the electrostatic adsorption force.

Examples of the display materials include whiteboards, POP cards (posters, stickers, displays, etc.), labels, namers, shop guides (pamphlets, company information, lists of goods, menus, etc.), mats (lunch mats, table mats, stationery, etc.), manuals (various manuals for duty assignment, work, operation, etc., process sheets, time schedules, etc.), charts (marine charts, weather maps, graphic charts, ruled charts, etc.), catalogs, maps (marine maps, route maps, outdoor maps, etc.), price lists for display in shops, mountain climbing guides, cooking recipes, guide boards (floor guides, direction/destination guides, etc.), schedule tables, road signs (for funeral/housing exhibition places, etc.), room designation cards, school record tables, signboards (for keeping out, forest road construction, etc.), compartment piles, doorplates, calendars (with images), mouse pads, packing materials (packing paper, boxes, bags, etc.), and coasters. The display materials of the present invention can be any of these. The display materials are especially suitable for applications intended for indoor use.

## EXAMPLES

The present invention is explained below in more detail with reference to Preparation Examples, Production Examples, Examples, Comparative Examples, and Test Examples.

The thermoplastic resin compositions used in the Production Examples for producing resin film layers (A) and resin film layers (B) according to the present invention are shown collectively in Table 1. These compositions were produced by mixing beforehand the materials described in Table 1 in the ratios shown in Table 1 to obtain resin compositions (a) to (f), melt-kneading each of these compositions with a twin-screw extruder set at 210°C, subsequently extruding the composition into a strand using an extruder set at 230°C, cooling the strand, and then cutting the strand with a strand cutter. Pellets of the resin compositions (a) to (f) were thus produced and were used in the Production Examples which will be given later.

[Table 1]

Table 1

| Material used | Thermoplastic resin composition, blending ratio (% by weight) | | | | | |
|---|---|---|---|---|---|---|
| | a | b | c | d | e | f |
| Propylene homopolymer (manufactured by Nippon Polypropylene Corp.; trade name, Novatec PP FY4; MFR (230°C, 2.16 kg load), 5 g/10 min; melting point, 165°C) | 100 | 95 | 99.5 | 80 | 70 | - |
| Propylene homopolymer (manufactured by Nippon Polypropylene Corp.; trade name, Novatec PP MA3; MFR (230°C, 2.16 kg load), 11 g/10 min; melting point, 165°C) | - | - | - | - | - | 60 |
| High-density polyethylene (manufactured by Nippon Polyethylene Corp.; trade name, Novatec HD HJ360; MFR (190°C, 2.16 kg load), 5 g/10 min; melting point, 131°C) | - | - | - | 10 | 10 | 10 |
| Heavy calcium carbonate (manufactured by Bihoku Funka Kogyo Co., Ltd.; trade name, SOFTON 1800; average particle diameter, 1.2 μm) | - | 5 | - | 10 | 20 | 30 |
| Glycerol monostearate (manufactured by Wako Pure Chemical Industries, Ltd.; reagent) | - | - | 0.5 | - | - | - |

[Preparation Example 1 of Polymer Having Antistatic Function]

Into a four-neck flask fitted with a stirring device, a reflux condenser, a thermometer, and a dropping funnel were introduced 100 parts by weight of polyethylene glycol monomethacrylate (manufactured by NOF Corporation, trade name: BLENMER-PE-350), 20 parts by weight of lithium perchlorate (manufactured by Wako Pure Chemical Industries, Ltd., Reagent), 1 part by weight of hydroquinone (manufactured by Wako Pure Chemical Industries, Ltd., Reagent) and 400 parts by weight of propylene glycol monoethyl ether (manufactured by Wako Pure Chemical Industries, Ltd., Reagent), and the inside of the system was subjected to nitrogen substitution, followed by reaction at 60°C for 40 hours. Thereto were added 5 parts by weight of stearyl methacrylate (manufactured by Wako Pure Chemical Industries, Ltd., Reagent), 5 parts by weight of n-butyl methacrylate (manufactured by Wako Pure Chemical Industries, Ltd., Reagent), and 1 part by weight of azobisisobutyronitrile (manufactured by Wako Pure Chemical Industries, Ltd., Reagent), followed by polymerization reaction at 80°C for 3 hours. Thereafter, the solid content was adjusted to 20% by weight by adding propylene glycol monoethyl ether to obtain a solution of a polymer having antistatic function composed of an alkali metal salt-containing polymer, which had a weight-average molecular weight of about 300,000 and a lithium concentration in the solid content of 0.6% by weight.

[Preparation Example 2 of Polymer Having Antistatic Function]

Into a four-neck flask fitted with a stirring device, a reflux condenser, a thermometer, and a dropping funnel were introduced 35 parts by weight of N,N-dimethylaminoethyl methacrylate (manufactured by Mitsubishi Gas Chemical Co., Inc.), 20 parts by weight of ethyl methacrylate (manufactured by Wako Pure Chemical Industries, Ltd., Reagent), 20 parts by weight of cyclohexyl methacrylate (manufactured by Wako Pure Chemical Industries, Ltd., Reagent), 25 parts by weight of stearyl methacrylate (manufactured by Wako Pure Chemical Industries, Ltd., Reagent), 150 parts by weight of ethyl alcohol, 1 part by weight of azobisisobutyronitrile (manufactured by Wako Pure Chemical Industries, Ltd., Reagent), and the inside of the system was subjected to nitrogen substitution, followed by polymerization reaction at 80°C for 6 hours under nitrogen stream. Then, 85 parts by weight of a 50% by weight aqueous solution of 3-chloro-2-hydroxypropyltrimethylammonium chloride (manufactured by Wako Pure Chemical Industries, Ltd., Reagent) was added thereto, followed by further reaction at 80°C for 15 hours. Thereafter, ethyl alcohol was removed by evaporation with adding water dropwise to obtain a solution of a polymer having antistatic function composed of a quaternary ammonium salt-type copolymer, which had a content of 20% by weight as final solid content.

[Preparation Example 3 of Polymer Binder]

Into a four-neck flask fitted with a stirrer, a reflux condenser, a thermometer, and a dropping funnel were charged 15 parts by weight of 2-hydroxyethyl methacrylate (manufactured by Wako Pure Chemical Industries, Ltd., Reagent), 50 parts by weight of methyl methacrylate (manufactured by Wako Pure Chemical Industries, Ltd., Reagent), 35 parts by weight of ethyl acrylate (manufactured by Wako Pure Chemical Industries, Ltd., Reagent), and 100 parts by weight of toluene (manufactured by Wako Pure Chemical Industries, Ltd., Reagent), and after nitrogen substitution, 0.6 parts by weight of 2,2'-azobis(isobutyronitrile) (manufactured by Wako Pure Chemical Industries, Ltd., Reagent) was introduced as an initiator, followed by polymerization at 80°C for 4 hours. The resulting solution was a 50% toluene solution of a hydroxyl group-containing methacrylate ester polymer having a hydroxyl value of 65. Then, to 100 parts by weight of the solution was added 30 parts by weight of a 20% methyl ethyl ketone solution of a vinyl chloride/vinyl acetate copolymer (manufactured by Shin Dai-Ichi Vinyl Corporation, trade name: ZEST C150ML), and the solid content was adjusted to 20% by weight by adding methyl ethyl ketone (manufactured by Wako Pure Chemical Industries, Ltd., Reagent) to obtain a polymer binder solution.

[Preparation Example 4 of Polymer Binder]

Into a four-neck flask equipped with a stirrer, a reflux condenser, a thermometer, and a nitrogen gas inlet were introduced 100 parts by weight of a 25% by weight aqueous solution of polyethyleneimine (manufactured by Nippon Shokubai Co., Ltd., trade name: EPOMINE P-1000), 10 parts by weight of 1-chlorobutane (manufactured by Wako Pure Chemical Industries, Ltd., Reagent), and 10 parts by weight of propylene glycol monomethyl ether (manufactured by Wako Pure Chemical Industries, Ltd., Reagent), and the whole was stirred under a nitrogen stream, followed by modification reaction at 80°C for 20 hours. Then, the solid content was adjusted to 20% by weight by adding water to the solution to obtain a polymer binder solution.

[Preparation Examples 1 of Coat Layer]

While methyl ethyl ketone was softly stirred in a Kaures mixer, each of the weighed pigment particles described in Table 2 was added thereto little by little to adjust the solid concentration to 20% by weight. Thereafter, the whole was stirred with increasing the number of rotation of the Kaures mixer for 30 minutes to prepare a pigment dispersion.

Then, the number of rotation of the Kaures mixer was decreased, and each of the polymer binder solutions described in the above Preparation Examples, a solution of a polymer having antistatic function, and a solution of the curing agent described in Table 2 (diluted to a solid content of 20% by weight with ethyl acetate) were added to the pigment dispersion in this order so as to be the blend ratio described in Table 2. After the whole was stirred for 20 minutes without further treatment, it was filtrated through a 100-mesh filter to remove coarse particles, followed by diluting with methyl ethyl ketone so as to be the solid concentration described in Table 2, thereby obtaining a coating solution for a coat layer (Preparation Example 1).

[Preparation Examples 2 of Coat Layer]

To a vessel equipped with a stirrer were added each of the polymer binder solutions described in Table 2 and a solution of a polymer having antistatic function in this order so as to be the blend ratio described in Table 2. Then, the whole was diluted with water so as to be the solid concentration described in Table 2 and was stirred for 20 minutes without further treatment, thereby obtaining a coating solution for a coat layer (Preparation Example 2).

[Table 2]

Table 2

| Material used | | Coat layer, blending ratio (solid basis/% bv weight) | |
|---|---|---|---|
| | | Preparation Example 1 | Preparation Example 2 |
| Polymer having antistatic function | Polymer having antistatic function obtained in Preparation Example 1 (alkali-metal-salt-containing polymer in which lithium concentration in the solid components is 0.6 wt%) | 10 | - |
| | Polymer having antistatic function obtained in Preparation Example 2 (copolymer of quaternary ammonium salt type) | - | 20 |

(continued)

| Material used | | Coat layer, blending ratio (solid basis/% bv weight) | |
|---|---|---|---|
| | | Preparation Example 1 | Preparation Example 2 |
| Polymeric binder | Polymeric binder obtained in Preparation Example 3 (acrvlic-ester-based copolymer) | 42 | - |
| | Polymeric binder obtained in Preparation Example 4 (polyethyleneimine-based polymer) | - | 40 |
| | Epichlorohydrin adduct of polyamine-polyamide (manufactured by Seiko PMC Corp.; trade name, WS4024) | - | 40 |
| Pigment particles | Precipitated silica (manufactured by Mizusawa Industrial Chemical, Ltd.; trade name, Mizucasil P-527; average particle diameter, 1.6 μm; oil absorption, 180 cc/100 g) | 15 | - |
| | Surface-treated barium sulfate (manufactured by Sakai Chemical Industry Co., Ltd.; trade name, Bariace B-32; average particle diameter, 0.3 μm) | 30 | - |
| Hardener | Hexamethylene diisocyanate (manufactured by Nippon Polyurethane Co., Ltd.; trade name, Coronate HL) | 3 | - |
| Solid concentration of coating solution (% by weight) | | 20 | 3 |

[Production Examples 1, 3, and 4 for Resin Film Layer]

The thermoplastic resin composition a was melt-kneaded with an extruder set at 230°C, subsequently fed to an extrusion die set at 250°C, and then extruded into a sheet form. The extrudate was cooled with a cooler to 60°C to obtain an unstretched sheet. This unstretched sheet was heated to 150°C and stretched fivefold in the machine direction (MD) while utilizing a difference in peripheral speed between rolls. Subsequently, this fivefold stretched sheet was cooled to 60°C, and using a tenter oven, the sheet was heated again to about 155°C, stretched eightfold in the transverse direction (TD), and then further subjected to a heat treatment with a heat setting zone regulated so as to have a temperature of 160°C. Thereafter, the stretched sheet was cooled to 60°C and trimmed. Next, one surface of this biaxially stretched film was subjected to a surface treatment with a corona discharge. Thus, a biaxially stretched resin film having the thickness and basis weight shown in Table 3 was obtained. This film is referred to as the resin film layer of Production Examples 1, 3, and 4.

[Production Example 2 for Resin Film Layer]

The thermoplastic resin composition a was melt-kneaded with an extruder set at 230°C, subsequently fed to an extrusion die set at 250°C, and then extruded into a sheet form. The extrudate was cooled with a cooler to 60°C to obtain an unstretched sheet. This unstretched sheet was heated to 150°C and stretched fivefold in the machine direction (MD) while utilizing a difference in peripheral speed between rolls. Subsequently, this fivefold stretched sheet was cooled to 60°C, and using a tenter oven, the sheet was heated again to about 155°C, stretched eightfold in the transverse direction (TD), and then further subjected to a heat treatment with a heat setting zone regulated so as to have a temperature of 160°C. Thereafter, the stretched sheet was cooled to 60°C and trimmed to obtain a biaxially stretched resin film having a thickness of 40 μm and a basis weight of 36 g/m$^2$. Next, one surface of this biaxially stretched film was subjected to a surface treatment with a corona discharge. Subsequently, the coating solution obtained in Preparation Example 1 for Coat Layer was applied on the corona-discharge-treated surface with a gravure coater and dried, thereby obtaining a resin film layer which had a coat layer having a thickness of 2 μm and a basis weight of 2 g/m$^2$.

[Production Example 5 for Resin Film Layer]

The thermoplastic resin composition b and the thermoplastic resin composition a were separately melt-kneaded with three extruders set at 230°C, subsequently fed to an extrusion die set at 250°C, laminated within the die, and extruded into a sheet form. The extrudate was cooled with a cooler to 60°C to obtain an unstretched sheet. This unstretched sheet was heated to 150°C and stretched fivefold in the machine direction. Subsequently, this fivefold stretched sheet was cooled to 60°C, and using a tenter oven, the sheet was heated again to about 155°C, stretched eightfold in the transverse direction, and then further subjected to a heat treatment with a heat setting zone regulated so as to have a temperature of 160°C. Thereafter, the stretched sheet was cooled to 60°C and trimmed. Next, one surface of this biaxially stretched film was subjected to a surface treatment with a corona discharge, thereby obtaining a biaxially stretched resin film which had a thickness of 50 μm, a basis weight of 44 g/m$^2$, and a porosity of 5% and had a three-layer structure [resin compositions of the layers (a/b/a); thicknesses of the layers (2 μm/46 μm/2 μm); stretching modes of the layers (biaxial/biaxial/biaxial)]. This film was used as a resin film layer.

[Production Example 6 for Resin Film Layer]

The thermoplastic resin composition c and the thermoplastic resin composition a were separately melt-kneaded with three extruders set at 230°C, subsequently fed to an extrusion die set at 250°C, laminated within the die, and extruded into a sheet form. The extrudate was cooled with a cooler to 60°C to obtain an unstretched sheet. This unstretched sheet was heated to 150°C and stretched fivefold in the machine direction. Subsequently, this fivefold stretched sheet was cooled to 60°C, and using a tenter oven, the sheet was heated again to about 155°C, stretched eightfold in the transverse direction, and then further subjected to a heat treatment with a heat setting zone regulated so as to have a temperature of 160°C. Thereafter, the stretched sheet was cooled to 60°C and trimmed. Next, one surface of this biaxially stretched film was subjected to a surface treatment with a corona discharge, thereby obtaining a biaxially stretched resin film which had a thickness of 45 μm, a basis weight of 41 g/m$^2$, and a porosity of 0% and had a three-layer structure [resin compositions of the layers (a/c/a); thicknesses of the layers (2 μm/41 μm/2 μm); stretching modes of the layers (biaxial/biaxial/biaxial)]. This film was used as a resin film layer.

[Production Example 7 for Resin Film Layer]

The thermoplastic resin composition d and the thermoplastic resin composition e were separately melt-kneaded with three extruders set at 230°C, subsequently fed to an extrusion die set at 250°C, laminated within the die, and extruded into a sheet form. The extrudate was cooled with a cooler to 60°C to obtain an unstretched sheet. This unstretched sheet was heated to 145°C and stretched fivefold in the machine direction while utilizing a difference in peripheral speed between rolls. Subsequently, this fivefold stretched sheet was cooled to 60°C, and using a tenter oven, the sheet was heated again to about 155°C, stretched eightfold in the transverse direction, and then further subjected to a heat treatment with a heat setting zone regulated so as to have a temperature of 160°C. Thereafter, the stretched sheet was cooled to 60°C and trimmed, thereby obtaining a biaxially stretched resin film which had a thickness of 45 μm, a basis weight of 36 g/m$^2$, and a porosity of 20% and had a three-layer structure [resin compositions of the layers (e/d/e); thicknesses of the layers (2 pm/41 μm/2 μm); stretching modes of the layers (biaxial/biaxial/biaxial)].

Subsequently, one surface of this biaxially stretched film was subjected to a surface treatment with a corona discharge, and the coating solution obtained in Preparation Example 1 for Coat Layer was applied on the corona-discharge-treated surface with a gravure coater and dried. Thus, a resin film layer which had a coat layer having a basis weight of 2 g/m$^2$ was obtained.

[Production Example 8 for Resin Film Layer]

The thermoplastic resin composition e was melt-kneaded with an extruder set at 230°C, subsequently fed to an extrusion die set at 250°C, and then extruded into a sheet form. The extrudate was cooled with a cooler to 60°C to obtain an unstretched sheet.

This unstretched sheet was heated to 145°C and stretched fivefold in the machine direction while utilizing a difference in peripheral speed between rolls. Subsequently, the thermoplastic resin composition f was melt-kneaded with two extruders set at 250°C and subsequently extruded into sheets, which were laminated respectively to both surfaces of the fivefold stretched sheet prepared above, thereby obtaining a laminated sheet having a three-layer structure. Next, this laminated sheet was cooled to 60°C, and using a tenter oven, the sheet was heated again to about 150°C, stretched 8.5-fold in the transverse direction, and then further subjected to a heat treatment with a heat setting zone regulated so as to have a temperature of 160°C.

Thereafter, the stretched sheet was cooled to 60°C and trimmed, thereby obtaining a stretched resin film which had a thickness of 50 μm, a basis weight of 39 g/m$^2$, and a porosity of 29% and had a three-layer structure [resin compositions of the layers (f/e/f); thicknesses of the layers (10 μm/30 μm/10 μm); stretching modes of the layers (uniaxial/biaxial/uniaxial)].

Subsequently, one surface of this stretched film was subjected to a surface treatment with a corona discharge, and the coating solution obtained in Preparation Example 2 for Coat Layer was applied on the corona-discharge-treated surface with a squeeze coater and dried. Thus, a resin film layer which had a coat layer having a basis weight of 0.1 g/m$^2$ was obtained.

[Production Example 9 for Resin Film Layer]

The thermoplastic resin composition e was melt-kneaded with an extruder set at 230°C, subsequently fed to an extrusion die set at 250°C, and then extruded into a sheet form. The extrudate was cooled with a cooler to 60°C to obtain an unstretched sheet.

This unstretched sheet was heated to 135°C and stretched fivefold in the machine direction while utilizing a difference in peripheral speed between rolls. Subsequently, the thermoplastic resin composition a and the thermoplastic resin composition f were separately melt-kneaded with two extruders set at 250°C, subsequently fed to an extrusion die set at 250°C, laminated within the die, and extruded into a sheet, which was laminated to one surface of the fivefold stretched sheet prepared above, so that the composition a constituted an outermost layer. Meanwhile, the thermoplastic resin composition f was melt-kneaded with an extruder set at 250°C, subsequently extruded into a sheet form, and laminated to the other surface of the fivefold stretched sheet prepared above, thereby obtaining a laminated sheet having a four-layer structure. Next, this laminated sheet was cooled to 60°C, and using a tenter oven, the sheet was heated again to about 150°C, stretched 8.5-fold in the transverse direction, and then further subjected to a heat treatment with a heat setting zone regulated so as to have a temperature of 160°C.

Thereafter, the stretched sheet was cooled to 60°C and trimmed, thereby obtaining a stretched resin film which had a thickness of 70 μm, a basis weight of 68 g/m$^2$, and a porosity of 23% and had a four-layer structure [resin compositions of the layers (a/f/e/f); thicknesses of the layers (20 μm/10 μm/30 μm/10 μm); stretching modes of the layers (uniaxial/uniaxial/biaxial/uniaxial)].

Subsequently, that surface of this stretched resin film which was on the composition f side was subjected to a surface treatment with a corona discharge, and the coating solution obtained in Preparation Example 1 for Coat Layer was applied on the corona-discharge-treated surface with a gravure coater and dried. Thus, a resin film layer which had a coat layer having a basis weight of 2 g/m$^2$ was obtained.

[Production Example 10 for Resin Film Layer]

Wood-free paper (manufactured by Oji Paper Co., Ltd.; trade name, Marshmallow; thickness, 126 μm) was used.

Properties of the resin film layers obtained in the Production Examples are shown collectively in Table 3.

[Table 3]

Table 3

| Production Example for resin film layer | Configuration of resin film layer | | | | Surface treatment | Coat layer | | Surface resistivity (Q) | |
|---|---|---|---|---|---|---|---|---|---|
| | Thermoplastic resin composition used | Stretching mode of each layer | Basis weight (g/m$^2$) | Thickness (each layer) μm | | Kind | Basis weight (g/m$^2$) | Treated surface | Untreated surface |
| Production Example 1 | a | biaxial | 18 | 20 | one surface | none | - | $8\times10^{15}$ | $9\times10^{15}$ |
| Production Example 2 | a | biaxial | 36 | 40 | one surface | Preparation Example 1 | 2 | $9\times10^{11}$ | $2\times10^{15}$ |
| Production Example 3 | a | biaxial | 91 | 100 | one surface | none | - | $4\times10^{15}$ | $5\times10^{15}$ |
| Production Example 4 | a | biaxial | 228 | 250 | one surface | none | - | $1\times10^{15}$ | $1\times10^{15}$ |
| Production Example 5 | a/b/a | biaxial/biaxial/ biaxial | 44 | 50 (2/46/2) | one surface | none | - | $3\times10^{15}$ | $2\times10^{15}$ |
| Production Example 6 | a/c/a | biaxial/biaxial/ biaxial | 41 | 45 (2/41/2) | one surface | none | - | $5\times10^{15}$ | $4\times10^{15}$ |
| Production Example 7 | e/d/e | biaxial/biaxial/ biaxial | 36 | 45 (2/41/2) | one surface | Preparation Example 1 | 2 | $2\times10^{12}$ | $8\times10^{14}$ |
| Production Example 8 | f/e/f | uniaxial/biaxial/ uniaxial | 38 | 50 (10/30/10) | one surface | Preparation Example 2 | 0.1 | $5\times10^{9}$ | $7\times10^{13}$ |
| Production Example 9 | a/f/e/f | uniaxial/ uniaxial/biaxial/ uniaxial | 68 | 70 (20/10/30/10) | one surface (f-side surface) | Preparation Example 1 | 2 | $1\times10^{12}$ | $8\times10^{13}$ |
| Production Example 10 | wood-free paper (manufactured by Oji Paper; trade name, Marshmallow; thickness, 126 μm) | | | | | none | - | $4\times10^{10}$ | $8\times10^{10}$ |

[Production Examples for Protective Layer]

Production Examples for protective layers (I) according to the present invention are shown collectively in Table 4.

[Table 4]

Table 4

| Protective layer | Details | Thickness (μm) |
|---|---|---|
| 1 | A film obtained by directly applying one-solvent acrylic pressure-sensitive adhesive of strong-tack type [manufactured by Toyo Chem Co., Ltd.; Oribain BPS 5160] with comma coater to the corona-discharge-treated surface of ethylene/tetrafluoroethylene copolymer film having thickness of 50 μm [manufactured by Daikin Industries, Ltd.; trade name, Neoflon ETFE] so as to result in dry thickness of 25 μm, and drying the adhesive to form an adhesion layer. | 75 |
| 2 | A film obtained by mixing a fluororesin coating material [manufactured by Daikin Industries, Ltd.; trade name, Zeffle GK570] with a hardener [manufactured by Nippon Polyurethane Co., Ltd.; trade name, Coronate HX] in weight ratio of 100:15, applying the mixture to one surface of biaxially stretched PET film having thickness of 100 μm [manufactured by Mitsubishi Plastics Ltd.; O300] so as to result in dry application amount of 2 g/m$^2$, directly applying a one-pack solvent-based acrylic pressure-sensitive adhesive of strong-tack type [manufactured by Toyo Chem Co., Ltd.; Oribain BPS 5160] to the other surface of the PET film with comma coater so as to result in dry thickness of 25 μm, and drying the adhesive to form an adhesion layer. | 127 |
| 3 | A coating film obtained by mixing a fluororesin coating material [manufactured by Daikin Industries, Ltd.; trade name, Zeffle GK570] with a hardener [manufactured by Nippon Polyurethane Co., Ltd.; trade name, Coronate HX] in weight ratio of 100:15, directly applying the mixture with bar coater so as to result in dry thickness of 2 μm and dry-basis weight of 2 g/m$^2$, and drying the mixture. | - |

[Examples 1 to 8]

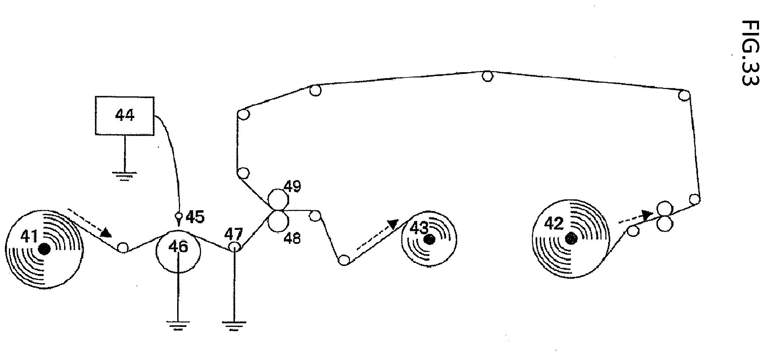

Using the production apparatus, a diagrammatic view of which is shown in Fig. 33, each of the resin film layers obtained in Production Examples 2 to 9 for Resin Film Layer was unwound as a resin film layer (A) from the roll 41, and the untreated surface of the resin film layer (A) was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 5 was used.

Separately therefrom, the resin film layer obtained in Production Example 2 was unwound as a resin film layer (B) from the roll 42, and superposed on the resin film layer (A) so that the surface of the layer (A) which had undergone the charge injection treatment above was in contact with the untreated surface (uncoated surface) of the resin film layer (B). The two layers were press-bonded to each other with the pressure rollers 48 and 49 to obtain an electrostatic adsorbable laminate 43.

Separately therefrom, glassine paper which had undergone a silicone treatment (trade name, G7B; manufactured by Oji Tac Co., Ltd.) was used as a release sheet layer (E), and a 100:3 liquid mixture of a solvent-based acrylic pressure-sensitive adhesive (trade name, Oribain BPS1109; manufactured by Toyo Chem Co., Ltd.) and an isocyanate-based crosslinking agent (trade name, Oribain BHS8515; manufactured by Toyo Chem Co., Ltd.) was applied to the silicone-treated surface of the release sheet layer (E) with a comma coater so as to result in a basis weight on dry basis of 25 g/m$^2$. The mixture applied was dried to form an adhesive layer (C).

Subsequently, the electrostatic adsorbable laminate was superposed on this adhesive layer (C) so that the surface of the laminate which was on the resin film layer (A) side was in contact with the adhesive layer (C), and the electrostatic adsorbable laminate and the glassine paper were press-bonded to each other with pressure rollers. Thus, electrostatic adsorbable sheets (iii) of Examples 1 to 8 were obtained.

[Example 9]

An adhesive (a 1:1 liquid mixture of TM-329 (trade name) and CAT-18B (trade name), both manufactured by Toyo-Morton, Ltd.) was applied to the untreated surface of the resin film layer obtained in Production Example 8 for Resin Film Layer, so as to result in a solid amount of 3 g/m$^2$. The adhesive applied was dried at 40°C for 1 minute. Thereafter, the resin film layer obtained in Production Example 1 for Resin Film Layer was laminated thereto so that the untreated surface of this resin film layer faced outward. This laminate was used as a resin film layer (A), and an electrostatic adsorbable sheet (iii) was obtained in the same manner as in Example 1, except that the untreated surface thereof (i.e., the untreated surface of the resin film layer of Production Example 1) was subjected to a charge injection treatment with a direct-current corona discharge.

[Example 10]

The resin film layer obtained in Production Example 9 for Resin Film Layer was used as a resin film layer (A). A 100:3 liquid mixture of a solvent-based acrylic pressure-sensitive adhesive of the strong-tack type (trade name, Oribain BPS5209; manufactured by Toyo Chem Co., Ltd.) and an isocyanate-based crosslinking agent (trade name, Oribain BHS8515; manufactured by Toyo Chem Co., Ltd.) was directly applied to the treated surface thereof (the surface on the composition f side) with a comma coater so as to result in a basis weight on dry basis of 25 g/m$^2$. The mixture applied was dried to form an adhesion layer (C). Subsequently, glassine paper which had undergone a silicone treatment (trade name, G7B; manufactured by Oji Tac Co., Ltd.) was used as a release sheet layer (E), and the adhesion layer (C) was superposed thereon so that the adhesion layer (C) was in contact with the silicone-treated surface of the paper. The two sheets were press-bonded to each other with pressure rollers to obtain a pressure-sensitive adhesive laminate composed of release sheet layer (E)/adhesive layer (C)/resin film layer (A).

Subsequently, using the production apparatus, a diagrammatic view of which is shown in Fig. 33, the resin film layer obtained in Production Example 2 was unwound as a resin film layer (B) from the roll 41, and the untreated surface thereof was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 5 was used.

Separately therefrom, the pressure-sensitive adhesive laminate was unwound from the roll 42, and superposed on the resin film layer (B) so that the surface of the layer (B) which had undergone the charge injection treatment above was in contact with the untreated surface (the surface on the resin film layer (A) side) of the pressure-sensitive adhesive laminate. The two sheets were press-bonded to each other with pressure rollers 48 and 49 to obtain an electrostatic adsorbable sheet 43.

[Examples 11 and 12]

Using the production apparatus, a diagrammatic view of which is shown in Fig. 33, the resin film layer obtained in Production Example 2 or 7 for Resin Film Layer was unwound as a resin film layer (A) from the roll 41, and the untreated surface of the resin film layer (A) was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 5 was used.

Separately therefrom, the resin film layer obtained in Production Example 2 was unwound as a resin film layer (B) from the roll 42, and superposed on the resin film layer (A) so that the surface of the layer (A) which had undergone the charge injection treatment above was in contact with the untreated surface (uncoated surface) of the resin film layer (B). The two layers were press-bonded to each other with the pressure rollers 48 and 49 to obtain an electrostatic adsorbable laminate.

Separately therefrom, glassine paper which had undergone a silicone treatment (trade name, G7B; manufactured by Oji Tac Co., Ltd.) was used as a release sheet layer (E) and a release sheet layer (F), and a 100:3 liquid mixture of a solvent-based acrylic pressure-sensitive adhesive (trade name, Oribain BPS1109; manufactured by Toyo Chem Co., Ltd.) and an isocyanate-based crosslinking agent (trade name, Oribain BHS8515; manufactured by Toyo Chem Co., Ltd.) was applied to the silicone-treated surface of each of the release sheet layers (E) and (F) with a comma coater so as to result in a basis weight on dry basis of 25 g/m$^2$. The mixture applied was dried to form an adhesive layer (C) and an adhesive layer (D).

Subsequently, the electrostatic adsorbable laminate was superposed on the adhesive layer (C) so that the surface of the laminate which was on the resin film layer (A) side was in contact with the adhesive layer (C), and the electrostatic adsorbable laminate and the glassine paper were press-bonded to each other with pressure rollers. Successively, the resultant laminated sheet was superposed on the adhesive layer (D) so that the surface of the electrostatic adsorbable laminate which was on the resin film layer (B) side was in contact with the adhesive layer (D), and the whole stack was press-bonded with pressure rollers. Thus, an electrostatic adsorbable sheet (iii) of Example 11 or 12 was obtained.

[Example 13]

The resin film layer obtained in Production Example 9 for Resin Film Layer was used as a resin film layer (A). Meanwhile, glassine paper which had undergone a silicone treatment (trade name, G7B; manufactured by Oji Tac Co., Ltd.) was used as a release sheet layer (E), and a 100:3 liquid mixture of a solvent-based acrylic pressure-sensitive adhesive (trade name, Oribain BPS1109; manufactured by Toyo Chem Co., Ltd.) and an isocyanate-based crosslinking agent (trade name, Oribain BHS8515; manufactured by Toyo Chem Co., Ltd.) was applied to the silicone-treated surface of the release sheet layer (E) with a comma coater so as to result in a basis weight on dry basis of 25 g/m$^2$. The mixture applied was dried to form an adhesive layer (C).

Subsequently, the resin film layer (A) was superposed on this glassine paper so that the treated surface thereof (the surface on the composition f side) was in contact with the adhesive layer (C). The resin film layer (A) and the glassine paper were press-bonded to each other with pressure rollers to obtain a pressure-sensitive adhesive laminate I composed of release sheet layer (E)/adhesive layer (C)/resin film layer (A).

Similarly, the resin film layer obtained in Production Example 2 for Resin Film Layer was used as a resin film layer (B). Meanwhile, glassine paper which had undergone a silicone treatment (trade name, G7B; manufactured by Oji Tac Co., Ltd.) was used as a release sheet layer (F), and a 100:3 liquid mixture of a solvent-based acrylic pressure-sensitive adhesive (trade name, Oribain BPS1109; manufactured by Toyo Chem Co., Ltd.) and an isocyanate-based crosslinking agent (trade name, Oribain BHS8515; manufactured by Toyo Chem Co., Ltd.) was applied to the silicone-treated surface of the release sheet layer (F) with a comma coater so as to result in a basis weight on dry basis of 25 g/m$^2$. The mixture applied was dried to form an adhesive layer (D).

Subsequently, the resin film layer (B) was superposed on the adhesive layer (D) so that the treated surface thereof was in contact with the adhesive layer (D). The resin film layer (B) and the glassine paper were press-bonded to each other with pressure rollers to obtain a pressure-sensitive adhesive laminate II composed of release sheet layer (F)/adhesive layer (D)/resin film layer (B).

Using the production apparatus, a diagrammatic view of which is shown in Fig. 33, the pressure-sensitive adhesive laminate I was unwound from the roll 41, and the surface thereof on the resin film layer (A) side was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 5 was used.

Separately therefrom, the pressure-sensitive adhesive laminate II was unwound from the roll 42, and superposed on the laminate I so that the surface of the resin film layer (A) which had undergone the charge injection treatment above was in contact with the surface of the pressure-sensitive adhesive laminate II which was on the resin film layer (B) side. The two laminates were press-bonded to each other with pressure rollers 48 and 49 to obtain an electrostatic adsorbable sheet 43.

[Comparative Example 1]

In the manner described in the patent documents 1 and 2 shown hereinabove, a double-faced pressure-sensitive adhesive sheet was obtained by disposing a pressure-sensitive adhesive on each surface of a transparent film. Specifically, glassine paper which had undergone a silicone treatment (trade name, G7B; manufactured by Oji Tac Co., Ltd.) was used as a release sheet layer (E), and a 100:3 liquid mixture of a solvent-based acrylic pressure-sensitive adhesive (trade name, Oribain BPS1109; manufactured by Toyo Chem Co., Ltd.) and an isocyanate-based crosslinking agent (trade name, Oribain BHS8515; manufactured by Toyo Chem Co., Ltd.) was applied to the silicone-treated surface of the release sheet layer (E) with a comma coater so as to result in a basis weight on dry basis of 25 g/m$^2$. The mixture applied was dried to form an adhesive layer (C).

Subsequently, the resin film layer obtained in Production Example 3 for Resin Film Layer was superposed on the adhesive layer (C) so that the treated surface thereof was in contact with the adhesive layer (C). The resin film layer and the glassine paper were press-bonded to each other with pressure rollers to obtain a pressure-sensitive adhesive laminate composed of release sheet layer (E)/adhesive layer (C)/resin film layer.

Separately therefrom, glassine paper which had undergone a silicone treatment (trade name, G7B; manufactured by Oji Tac Co., Ltd.) was used as a release sheet layer (F), and a 100:3 liquid mixture of a solvent-based acrylic pressure-sensitive adhesive (trade name, Oribain BPS1109; manufactured by Toyo Chem Co., Ltd.) and an isocyanate-based crosslinking agent (trade name, Oribain BHS8515; manufactured by Toyo Chem Co., Ltd.) was applied to the silicone-treated surface of the release sheet layer (F) with a comma coater so as to result in a basis weight on dry basis

of 25 g/m$^2$. The mixture applied was dried to form an adhesive layer (D).

Subsequently, the pressure-sensitive adhesive laminate was superposed on the adhesive layer (D) so that the untreated surface of the resin film layer of the laminate was in contact with the adhesive layer (D). The whole stack was press-bonded with pressure rollers to obtain a double-faced pressure-sensitive adhesive sheet composed of release sheet layer (E)/adhesive layer (C)/resin film layer/adhesive layer (D)/release sheet layer (F).

[Examples 14 to 21]

Using the production apparatus, a diagrammatic view of which is shown in Fig. 33, each of the resin film layers obtained in Production Examples 2 to 9 for Resin Film Layer was unwound as a resin film layer (A) from the roll 41, and the untreated surface of the resin film layer (A) was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 6 was used.

Separately therefrom, the resin film layer obtained in Production Example 9 was unwound as a resin film layer (B) from the roll 42, and superposed on the resin film layer (A) so that the surface of the layer (A) which had undergone the charge injection treatment above was in contact with the untreated surface (uncoated surface) of the resin film layer (B). The two layers were press-bonded to each other with the pressure rollers 48 and 49 to obtain an electrostatic adsorbable laminate.

Subsequently, that surface of the electrostatic adsorbable laminate which was on the resin film layer (A) side was printed with a UV ink-jet printer (manufactured by Océ-Japan Corp.; UV-IJ Luxel Jet UV250GT) to form a printed image thereon.

Separately therefrom, an ethylene/tetrafluoroethylene copolymer film having a thickness of 50 μm [manufactured by Daikin Industries, Ltd.; trade name, Neoflon ETFE] was used as a protective layer (I), and a one-pack solvent-based acrylic pressure-sensitive adhesive of the strong-tack type [manufactured by Toyo Chem Co., Ltd.; Oribain BPS5160] was directly applied to the corona-discharge-treated surface of the film with a comma coater so as to result in a thickness on dry basis of 25 μm. The pressure-sensitive adhesive applied was dried to form an adhesive layer (C). This protective layer (I) was superposed on the electrostatic adsorbable laminate so that the surface thereof on the adhesive layer side was in contact with that surface of the laminate which was on the printed layer (D) side. The electrostatic adsorbable laminate and the protective layer (I) were press-bonded to each other with pressure rollers. Thus, electrostatic adsorbable sheets of Examples 14 to 21 were obtained.

[Example 22]

Using the production apparatus, a diagrammatic view of which is shown in Fig. 33, the resin film layer obtained in Production Example 2 for Resin Film Layer was unwound as a resin film layer (A) from the roll 41, and the untreated surface of the resin film layer (A) was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 6 was used.

Separately therefrom, the resin film layer obtained in Production Example 9 was unwound as a resin film layer (B) from the roll 42, and superposed on the resin film layer (A) so that the surface of the layer (A) which had undergone the charge injection treatment above was in contact with the untreated surface (uncoated surface) of the resin film layer (B). The two layers were press-bonded to each other with the pressure rollers 48 and 49 to obtain an electrostatic adsorbable laminate.

Separately therefrom, an ethylene/tetrafluoroethylene copolymer film having a thickness of 50 μm [manufactured by Daikin Industries, Ltd.; trade name, Neoflon ETFE] was used as a protective layer (I), and a one-pack solvent-based acrylic pressure-sensitive adhesive of the strong-tack type [manufactured by Toyo Chem Co., Ltd.; Oribain BPS5160] was directly applied to the corona-discharge-treated surface of the film with a comma coater so as to result in a thickness on dry basis of 25 μm. The pressure-sensitive adhesive applied was dried to form an adhesive layer (C). This protective layer (I) was superposed on the electrostatic adsorbable laminate so that the surface thereof on the adhesive layer side was in contact with that surface of the laminate which was on the resin film layer (A) side. The electrostatic adsorbable laminate and the protective layer (I) were press-bonded to each other with pressure rollers. Thus, an electrostatic adsorbable sheet of Example 22 was obtained.

[Example 23]

An ethylene/tetrafluoroethylene copolymer film having a thickness of 50 μm [manufactured by Daikin Industries, Ltd.; trade name, Neoflon ETFE] was used as a protective layer (I), and a one-pack solvent-based acrylic pressure-sensitive adhesive of the strong-tack type [manufactured by Toyo Chem Co., Ltd.; Oribain BPS5160] was directly applied to the corona-discharge-treated surface of the film with a comma coater so as to result in a thickness on dry basis of 25 μm. The pressure-sensitive adhesive applied was dried to form an adhesive layer (C). Subsequently, this protective layer (I) was superposed on the resin film layer (A) obtained in Production Example 2, so that the surface thereof on the adhesive layer side was in contact with the treated surface (coated surface) of the resin film layer (A). The resin film layer (A) and the protective layer (I) were press-bonded to each other with pressure rollers to obtain an adsorbable sheet (i).

Subsequently, using the production apparatus, a diagrammatic view of which is shown in Fig. 33, the adsorbable sheet (i) was unwound from the roll 41, and the untreated surface of the adsorbable sheet (i) which was on the resin film layer (A) side was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 6 was used.

Separately therefrom, the resin film layer obtained in Production Example 9 was unwound as a resin film layer (B) from the roll (42), and superposed on the adsorbable sheet (i) so that the surface of the resin film layer (A) which had undergone the charge injection treatment above was in contact with the untreated surface (uncoated surface) of the resin film layer (B). The two sheets were press-bonded to each other with the pressure rollers 48 and 49 to obtain an electrostatic adsorbable sheet of Example 23.

[Example 24]

The treated surface (coated surface) of the resin film layer (A) obtained in Production Example 2 was printed with a UV ink-jet printer (manufactured by Océ-Japan Corp.; UV-IJ Luxel Jet UV250GT) to form a printed image thereon.

Separately therefrom, a mixture obtained by mixing a fluororesin coating material [manufactured by Daikin Industries, Ltd.; trade name, Zeffle GK570] and a hardener [manufactured by Nippon Polyurethane Co., Ltd.; trade name, Coronate HX] in a weight ratio of 100:15 was applied to one surface of a biaxially stretched PET film having a thickness of 100 μm [manufactured by Mitsubishi Plastics Ltd.; O300] so as to result in a thickness on dry basis of 2 μm and a basis weight on dry basis of 2 g/m$^2$. The mixture applied was dried to obtain a protective layer (I). Successively, a one-pack solvent-based acrylic pressure-sensitive adhesive of the strong-tack type [manufactured by Toyo Chem Co., Ltd.; Oribain BPS5160] was directly applied to the other surface of the PET film with a comma coater so as to result in a thickness on dry basis of 25 μm. The pressure-sensitive adhesive applied was dried to form an adhesive layer (C).

Subsequently, the resin film layer (A) was superposed on the protective layer (I) so that the surface thereof on the printed layer (D) side was in contact with the surface of the adhesive layer (C) formed on the protective layer (I). The resin film layer (A) and the protective layer (I) were press-bonded to each other with pressure rollers to obtain an adsorbable sheet (i).

Subsequently, using the production apparatus, a diagrammatic view of which is shown in Fig. 33, the adsorbable sheet (i) was unwound from the roll 41, and the untreated surface of the adsorbable sheet (i) which was on the resin film layer (A) side was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 6 was used.

Separately therefrom, the resin film layer obtained in Production Example 9 was unwound as a resin film layer (B) from the roll 42, and superposed on the adsorbable sheet (i) so that the surface of the resin film layer (A) which had undergone the charge injection treatment above was in contact with the untreated surface (uncoated surface) of the resin film layer (B). The two sheets were press-bonded to each other with the pressure rollers 48 and 49 to obtain an electrostatic adsorbable sheet of Example 24.

[Comparative Example 2]

An electrostatic adsorbable sheet (iii) including no protective layer (I) was obtained for the purpose of comparison with the electrostatic adsorbable sheets (iii) shown in Examples 14 to 24.

Specifically, using the production apparatus, a diagrammatic view of which is shown in Fig. 33, the resin film layer obtained in Production Example 9 for Resin Film Layer was unwound as a resin film layer (A) from the roll 41, and the untreated surface of the resin film layer (A) was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 6 was used.

Similarly, the resin film layer obtained in Production Example 9 was unwound as a resin film layer (B) from the roll 42, and superposed on the resin film layer (A) so that the surface of the layer (A) which had undergone the charge injection treatment above was in contact with the untreated surface (uncoated surface) of the resin film layer (B). The two layers were press-bonded to each other with the pressure rollers 48 and 49 to obtain an electrostatic adsorbable laminate.

Subsequently, that surface of the electrostatic adsorbable laminate which was on the resin film layer (A) side was printed with a UV ink-jet printer (manufactured by Océ-Japan Corp.; UV-IJ Luxel Jet UV250GT) to form a printed image thereon. Thus, an electrostatic adsorbable sheet of Comparative Example 2 was obtained.

[Comparative Example 3]

An electrostatic adsorbable sheet (iii) in which wood-free paper (manufactured by Oji Paper Co., Ltd.; trade name, Marshmallow; thickness, 126 μm) was used as a resin film layer (B) was obtained for the purpose of comparison with the electrostatic adsorbable sheets (iii) shown in Examples 14 to 24.

Specifically, using the production apparatus, a diagrammatic view of which is shown in Fig. 33, the resin film layer obtained in Production Example 2 for Resin Film Layer was unwound as a resin film layer (A) from the roll 41, and the untreated surface of the resin film layer (A) was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 6 was used.

Separately therefrom, the wood-free paper (manufactured by Oji Paper Co., Ltd.; trade name, Marshmallow; thickness, 126 μm) obtained in Production Example 10 was unwound as a resin film layer (B) from the roll 42, and superposed on the resin film layer (A) so that the surface of the layer (A) which had undergone the charge injection treatment above was in contact with a surface of the resin film layer (B). The two layers were press-bonded to each other with the pressure rollers 48 and 49 to obtain an electrostatic adsorbable laminate.

Subsequently, that surface of the electrostatic adsorbable laminate which was on the resin film layer (A) side was printed with a UV ink-jet printer (manufactured by Océ-Japan Corp.; UV-IJ Luxel Jet UV250GT) to form a printed image thereon.

Separately therefrom, an ethylene/tetrafluoroethylene copolymer film having a thickness of 50 μm [manufactured by Daikin Industries, Ltd.; trade name, Neoflon ETFE] was used as a protective layer (I), and a one-pack solvent-based acrylic pressure-sensitive adhesive of the strong-tack type [manufactured by Toyo Chem Co., Ltd.; Oribain BPS5160] was directly applied to the corona-discharge-treated surface of the film with a comma coater so as to result in a thickness on dry basis of 25 μm. The pressure-sensitive adhesive applied was dried to form an adhesive layer (C). This protective layer (I) was superposed on the electrostatic adsorbable laminate so that the surface thereof on the adhesive layer side was in contact with that surface of the laminate which was on the resin film layer (A) side. The electrostatic adsorbable laminate and the protective layer (I) were press-bonded to each other with pressure rollers. Thus, an electrostatic adsorbable sheet of Comparative Example 3 was obtained.

[Examples 25 and 26]

Using the production apparatus, a diagrammatic view of which is shown in Fig. 33, each of the resin film layers obtained in Production Examples 1 and 9 for Resin Film Layer was unwound as a resin film layer (A) from the roll 41, and the untreated surface of the resin film layer (A) was subjected to a charge injection treatment with a direct-current corona discharge. With respect to conditions for the charge injection treatment, the distance between the acicular application electrodes 45 and the counter-electrode roll 46 in Fig. 33 was set at 1 cm and the discharge voltage shown under Processing conditions in Table 6 was used.

Separately therefrom, the resin film layer obtained in Production Example 9 was unwound as a resin film layer (B) from the roll 42, and superposed on the resin film layer (A) so that the surface of the layer (A) which had undergone the charge injection treatment above was in contact with the untreated surface (uncoated surface) of the resin film layer (B). The two layers were press-bonded to each other with the pressure rollers 48 and 49 to obtain an electrostatic adsorbable laminate.

Subsequently, that surface of the electrostatic adsorbable laminate which was on the resin film layer (A) side was printed with a UV ink-jet printer (manufactured by Océ-Japan Corp.; UV-IJ Luxel Jet UV250GT) to form a printed image thereon.

Separately therefrom, a mixture obtained by mixing a fluororesin coating material [manufactured by Daikin Industries, Ltd.; trade name, Zeffle GK570] and a hardener [manufactured by Nippon Polyurethane Co., Ltd.; trade name, Coronate HX] in a weight ratio of 100:15 was directly applied with a bar coater to that surface of the electrostatic adsorbable laminate which was on the printed layer (D) side, so as to result in a thickness on dry basis of 2 μm and a basis weight on dry basis of 2 g/m$^2$. The mixture applied was dried to form a protective layer (I). Thus, an electrostatic adsorbable sheet of Example 25 was obtained.

The resin film layer (A)/resin film layer (B) combinations used in Examples 1 to 13 according to the present invention and in Comparative Example 1, the discharge voltages used therein for the charge injection treatment, and the results of the evaluation conducted in accordance with the Test Examples which will be given later are shown collectively in Table 5.

Furthermore, the resin film layer (A)/protective layer (I)/resin film layer (B) combinations used in Examples 14 to 26 according to the present invention and in Comparative Examples 2 and 3, the discharge voltages used therein for the charge injection treatment, and the results of the evaluation conducted in accordance with the Test Examples which will be given later are shown collectively in Table 6.

[Table 5]

Table 5

| | | Layer configuration of electrostatic adsorbable sheet | | | | Basis weight ($g/m^2$) | | Processing conditions | | Evaluation items | | |
|---|---|---|---|---|---|---|---|---|---|---|---|---|
| | | Adsorbable sheet (i) | | Support (ii) or adsorbable sheet (iv) | | Adsorb-able sheet (i) | Adsorb-able sheet (iv) | Discharge voltage (kV) | Sequence of processing | Adsorption force | | Presence or absence of air bubbles |
| | | Adhesive layer (C) | Resin film layer (A) | Resin film layer (B) | Adhesive layer (D) | | | | | Evaluation | $g/m^3$ | |
| Example | 1 | present | Production Example 2 | Production Example 2 | - | 63 | - | 15 | charging→adhesive bonding | ○ | 18000 | ○ |
| | 2 | present | Production Example 3 | Production Example 2 | - | 116 | - | 20 | charging -adhesive bonding | ○ | 14000 | ○ |
| | 3 | present | Production Example 4 | Production Example 2 | - | 253 | - | 25 | charging -adhesive bonding | ○ | 12000 | ○ |
| | 4 | present | Production Example 5 | Production Example 2 | - | 69 | - | 15 | charging -adhesive bonding | ○ | 15000 | ○ |
| | 5 | present | Production Example 6 | Production Example 2 | - | 66 | - | 15 | charging -adhesive bonding | ○ | 8000 | ○ |
| | 6 | present | Production Example 7 | Production Example 2 | - | 63 | - | 18 | charging -adhesive bonding | ○ | 13000 | ○ |
| | 7 | present | Production Example 8 | Production Example 2 | - | 64 | - | 18 | charging -adhesive bonding | ○ | 11000 | ○ |
| | 8 | present | Production Example 9 | Production Example 2 | - | 95 | - | 18 | charging -adhesive bonding | ○ | 23000 | ○ |

(continued)

| | | Layer configuration of electrostatic adsorbable sheet | | | | Basis weight (g/m²) | | Processing conditions | | Evaluation items | | |
|---|---|---|---|---|---|---|---|---|---|---|---|---|
| | | Adsorbable sheet (i) | | Support (ii) or adsorbable sheet (iv) | | Adsorb-able sheet (i) | Adsorb-able sheet (iv) | Discharge voltage (kV) | Sequence of processing | Adsorption force | | Presence or absence of air bubbles |
| | | Adhesive layer (C) | Resin film layer (A) | Resin film layer (B) | Adhesive layer (D) | | | | | Evaluation | g/m³ | |
| | 9 | present | Production Example 8 + Production Example 1 | Production Example 2 | - | 56 | - | 19 | charging→adhesive bonding | ○ | 19000 | ○ |
| | 10 | present | Production Example 9 | Production Example 2 | - | 95 | - | 18 | adhesive bonding -charging | ○ | 17000 | ○ |
| | 11 | present | Production Example 2 | Production Example 2 | present | 63 | 63 | 15 | charging -adhesive bonding | ○ | 15000/13000 | ○ |
| | 12 | present | Production Example 7 | Production Example 2 | present | 63 | 63 | 18 | charging -adhesive bonding | ○ | 11000/9000 | ○ |
| | 13 | present | Production Example 9 | Production Example 2 | present | 95 | 63 | 18 | adhesive bonding -charging | ○ | 15000/12000 | ○ |
| Comparative Example 1 | | present | Production Example 3 | | present | 118 | - | - | adhesive bonding alone | ○ | ≥100000 | × |

[Table 6]

Table 6

| | | Layer configuration of electrostatic adsorbable sheet | | | | Processing conditions | | Evaluation items | | |
|---|---|---|---|---|---|---|---|---|---|---|
| | | Adsorbable sheet (i) | | | Support layer (ii) | Discharge voltage (kV) | Sequence of processing | Adsorption force | | Written-image erasability |
| | | Protective layer (I) | Adhesive layer (C) | Resin film layer (A) | Resin film layer (B) | | | Evaluation | $g/m^3$ | |
| Example | 14 | protective layer 1 | present | Production Example 2 | Production Example 9 | 15 | charging→printing→protective layer | ○ | 21000 | ○ |
| | 15 | protective layer 1 | present | Production Example 3 | Production Example 9 | 20 | ↓ | ○ | 15000 | ○ |
| | 16 | protective layer 1 | present | Production Example 4 | Production Example 9 | 25 | ↓ | ○ | 14000 | ○ |
| | 17 | protective layer 1 | present | Production Example 5 | Production Example 9 | 15 | ↓ | ○ | 15000 | ○ |
| | 18 | protective layer 1 | present | Production Example 6 | Production Example 9 | 15 | ↓ | ○ | 8000 | ○ |
| | 19 | protective layer 1 | present | Production Example 7 | Production Example 2 | 18 | ↓ | ○ | 14000 | ○ |
| | 20 | protective layer 1 | present | Production Example 8 | Production Example 2 | 18 | ↓ | ○ | 14000 | ○ |
| | 21 | protective layer 1 | present | Production Example 9 | Production Example 2 | 18 | ↓ | ○ | 21000 | ○ |
| | 22 | protective layer 1 | present | Production Example 2 | Production Example 9 | 15 | charging→protective layer | ○ | 20000 | ○ |
| | 23 | protective layer 1 | present | Production Example 2 | Production Example 9 | 15 | protective layer→charging | ○ | 21000 | ○ |
| | 24 | protective layer 2 | present | Production Example 2 | Production Example 9 | 15 | printing→protective layer→charging | ○ | 20000 | ○ |
| | 25 | protective layer 3 | present | Production Example 1 | Production Example 9 | 10 | charging→printing→protective layer | ○ | 7000 | ○ |

(continued)

| | | Layer configuration of electrostatic adsorbable sheet | | | | Processing conditions | | Evaluation items | | |
|---|---|---|---|---|---|---|---|---|---|---|
| | | Adsorbable sheet (i) | | | Support layer (ii) | Discharge voltage (kV) | Sequence of processing | Adsorption force | | Written-image erasability |
| | | Protective layer (I) | Adhesive layer (C) | Resin film layer (A) | Resin film layer (B) | | | Evaluation | g/m$^3$ | |
| | 26 | protective layer 3 | present | Production Example 9 | Production Example 9 | 18 | ↓ | ○ | 21000 | ○ |
| Comparative Example 2 | | none | none | Production Example 2 | Production Example 9 | 15 | charging→printing | ○ | 21000 | × |
| Comparative Example 3 | | protective layer 1 | present | Production Example 2 | Production Example 10 | 15 | charging→printing→protective layer | Δ | 1000 | ○ |

[Evaluation Methods]

(Thickness)

Thickness in the present invention was measured in accordance with JIS-K-7130 using a constant-pressure thickness meter (manufactured by TECLOCK Corp.; trade name, PG-01J).

In the case where a resin film layer (A) formed had a multilayer structure, the thickness of each layer was determined in the following manner. A specimen to be examined which was cooled at a temperature of -60°C or lower with liquid nitrogen and placed on a glass plate was cut with a razor blade (manufactured by Schick Japan K.K.; trade name, Proline Blade) while perpendicularly applying the blade thereto, thereby producing a specimen for cross-section examination. The specimen obtained was subjected to a cross-section examination with a scanning electron microscope (manufactured by JEOL Ltd.; trade name, JSM-6490) to determine the boundaries of each thermoplastic resin composition from the appearance thereof. The thickness of each layer was determined by multiplying the thickness of the whole resin film layer (A) by the thickness proportion of the layer observed.

(Basis Weight)

In the present invention, the basis weights of the resin film layer (A), resin film layer (B), printed sheet layer (G), printed sheet layer (H), protective layer (I), adsorbable sheet (i), and adsorbable sheet (iv) were determined in accordance with JIS-P-8124 by weighing samples punched out in a size of 100 mm × 100 mm, with an electronic force balance.

The basis weights of the adhesive layer (C), adhesive layer (D), coat layer (K), and coat layer (L) were calculated from the individual basis weights determined above.

(Surface Resistivity)

Surface resistivity in the present invention was measured under the conditions of a temperature of 23°C and a relative humidity of 50%. In the case where the surface resistivity was $1\times10^7$ Ω or higher, the measurement was made in accordance with JIS-K-6911 using electrodes for the double-ring method. In the case where the surface resistivity was less than $1\times10^7$ Ω, the measurement was made with four probes in accordance with JIS-K-7194.

(Adsorption Force)

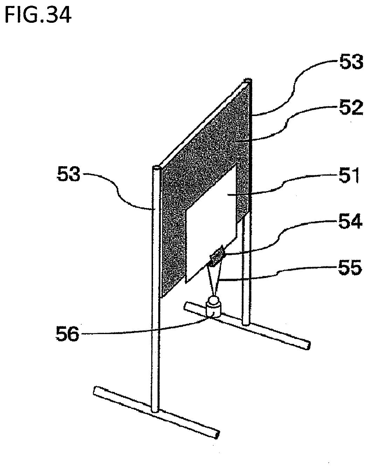

An electrostatic adsorbable sheet (iii) was cut into a size of 200 mm × 220 mm and stored for 1 day in an atmosphere having a relative humidity of 50%. Thereafter, in the same atmosphere, the adsorbable sheet (i) was peeled from the electrostatic adsorbable sheet (iii) and applied to the surface of the glass plate 52 of the adsorption force measuring device, a diagrammatic view of which is shown in Fig. 34, so as to result in a adsorbing area of 200 mm ×200 mm and so that the lower-end portion of the adsorbable sheet (i) 51 which had a width of 20 mm protruded. A clip 54 was attached to the lower-end portion of the adsorbable sheet (i) 51, and 10-g weights 56 to each of which a fishline 55 had been attached were added one by one as a load to the clip 54. The adsorption force per $m^2$ was determined from the weight of the weights 56 imposed at the time when the adsorbable sheet (i) 51 slipped off. The adsorbable sheet (i) was evaluated in accordance with the following criteria.

○: good; adsorption force is 5,000 $g/m^2$ or higher
Δ: fair; adsorption force is 1,000 $g/m^2$ or higher but less than 5,000 $g/m^2$
×: poor; adsorption force is less than 1,000 $g/m^2$

(Presence or Absence of Air Bubbles)

Synthetic paper (trade name, "YUPO" FEB-130; basis weight, 100.1 $m/g^2$; manufactured by Yupo Corp.) was cut into a size of 939 mm ×636 mm, and this cut paper was used as printing paper. Both surfaces thereof were subjected to four-color offset printing to prepare a printed matter (printed sheet layer (G)).

Subsequently, each of the electrostatic adsorbable sheets (iii) obtained in Examples 1 to 13 and the double-faced pressure-sensitive adhesive sheet obtained in Comparative Example 1 was unwound and, simultaneously therewith, the release sheet layer (E) was peeled off. Using a cold laminator, the both-surface-printed matter was laminated to the thus-exposed adhesive layer (C). Thus, electrostatic adsorbable sheets (iii) each including printed sheet layer (G)/adhesive layer (C)/resin film layer (A)/resin film layer (B) were obtained. At this point of time, there were no air bubbles between the adhesive layer (C) and the printed matter in all the Examples and Comparative Example.

Next, each electrostatic adsorbable sheet (iii) or double-faced pressure-sensitive adhesive sheet in which the printed sheet layer (G) had been laminated was cut into an A4 size. The support layer (ii) or the adsorbable sheet (iv) was peeled from the cut sheet to obtain a display material configured of the printed sheet layer (G) and an adsorbable sheet (i) (in the case of the double-faced pressure-sensitive adhesive sheet, the release sheet layer (F) was peeled off to obtain a display material configured of the printed sheet layer (G) and a double-faced pressure-sensitive adhesive sheet).

Subsequently, this display material was applied to a transparent and smooth glass plate so that the surface of the display material which was on the resin film layer (A) side (in the case of the double-faced pressure-sensitive adhesive sheet, the surface of the adhesive layer (D)) was in contact with the surface of the glass plate. The printed matter was sufficiently wiped by hand to remove the air. The display material was evaluated as to whether air bubbles were present or absent, in accordance with the following criteria. With respect to the electrostatic adsorbable sheets (iii) or double-faced pressure-sensitive adhesive sheet of Examples 1 to 5, Example 11, and Comparative Example 1, the printed image was able to be viewed through the glass plate as an adherend and through the resin film layer (A), since the resin film layer (A) used therein was transparent. With respect to the other Examples, the printed image was unable to be viewed from the glass surface side. In all the Examples and Comparative Example, however, the evaluation as to the presence or absence of air bubbles was conducted through an examination from the glass plate side.

○: good; no air bubbles are visually observable
×: poor; air bubbles are observable

(Written-image Erasability)

With respect to the electrostatic adsorbable sheets (iii) obtained in Examples 14 to 26 and Comparative Examples 2 and 3, characters and lines were written or drawn on the protective layer (I) using a writing utensil for exclusive use (manufactured by PLUS Corp. Stationery Company; trade name, PVMAR), and these electrostatic adsorbable sheets (iii) were stored for 1 week. Thereafter, the characters were erased with an eraser for exclusive use (manufactured by PLUS Corp. Stationery Company; trade name, Eraser ER-44369). The written-image erasability was evaluated in accordance with the following criteria.

○: good; the characters are able to be completely erased
×: poor; the characters are unable to be erased

As apparent from the results given above, in cases when the electrostatic adsorbable sheets (iii) of the present invention are used for applying a printed matter having no pressure-sensitive adhesiveness, as a poster, advertising leaflet, or the like, to an adherend and thus displaying the printed matter, the air trapped between the adherend and the printed matter can be easily removed. Air bubbles are hence less apt to remain, and the appearance of the printed matter is not impaired.

In cases when the resin film layer and adhesive layer in each of the electrostatic adsorbable sheets (iii) are transparent or translucent and when a printed matter is bonded through this adsorbable sheet to an adherend to obtain a display material, then the information, e.g., characters or a design, of the printed matter can be viewed through the adsorbable sheet and the transparent adherend.

Furthermore, the electrostatic adsorbable sheet (iii) on which a protective layer (I) has been disposed has excellent written-image erasability and is suitable for use as a whiteboard. Moreover, by recording constant information beneath the protective layer (I), the constant information is prevented from being impaired when variable information recorded on the protective layer (I) is erased.

These electrostatic adsorbable sheets (iii) retain high electrostatic adsorption force during the display and use, and the persistence of the electrostatic adsorption force is sufficient. The electrostatic adsorbable sheets can hence be displayed and used on adherends over a long period and, after the use, can be easily stripped off. In addition, the electrostatic adsorbable sheets have a feature wherein the electrostatic adsorption force is less apt to be affected by moisture.

While the present invention has been described in detail and with reference to specific embodiments thereof, it will be apparent to one skilled in the art that various changes and modifications can be made therein without departing from the scope thereof.

DESCRIPTION OF THE REFERENCE NUMERALS

1 Electrostatic adsorbable sheet (iii)

2 Adsorbable sheet (i)

3 Support layer (ii)

4 Adsorbable sheet (iv)

5 Resin film layer (A)

6 Resin film layer (B)

7 Adhesive layer (C)

8 Adhesive layer (D)

9 Release sheet layer (E)

10 Release sheet layer (F)

11 Printed sheet layer (G)

12 Printed sheet layer (H)

13 Protective layer (I)

14 Protective layer (J)

15 Coat layer (K)

16 Coat layer (L)

17 Printed image

18 Surface of bonding by electrostatic adsorption

19 Fluororesin film

20 Coat layer including fluororesin

21 Thermoplastic resin film

22 Adhesive or pressure-sensitive adhesive

31 Resin film layer (A) or resin film layer (B)

32 Direct-current high-voltage power source

33 Acicular application electrodes (planar arrangement)

34 Platy grounding electrode

35 Wire-shaped application electrode

36 Acicular application electrode

37 Roll-shaped grounding electrode

38 Wire-shaped application electrode

39 Acicular electrodes (transverse single-row arrangement)

41 Roll42 Roll

43 Electrostatic adsorbable sheet (iii) (electrostatic adsorbable object)

44 Direct-current high-voltage power source

45 Acicular application electrode

46 Counter-electrode roll

47 Guide roll (connected to ground)

48 Pressure roller

49 Pressure roller

51 Adsorbable sheet (i)

52 Glass plate

53 Pole

54 Clip

55 Fishline

56 Weight (load)

61 Display material

62 Adherend (glass plate, etc.)

63 Adsorbable sheet (i)

64 Printed sheet layer (G) (printed matter)

65 Support layer (ii)

71 Display material

72 Adherend

73 Adsorbable sheet (i)

## Claims

**1.** An electrostatic adsorbable sheet (iii) which is a laminate comprising:

an adsorbable sheet (i) comprising a resin film layer (A) having an adhesive layer (C) formed on one surface thereof, wherein the adhesive layer (C) contains a pressure-sensitive adhesive, and a release sheet layer (E) is further disposed on the adhesive layer (C),
wherein the resin film layer (A) of the adsorbable sheet (i) and a resin film layer (B) are adherent to each other by electrostatic adsorption, the laminate further comprising either one of (1) and (2):

(1) a support layer (ii) comprising the resin film layer (B), wherein the surface of the support layer (ii) which is not in contact with the resin film layer (A) has antistatic performance, or
(2) an adsorbable sheet (iv) comprising the resin film layer (B) having an adhesive layer (D) formed over one surface thereof.

**2.** The electrostatic adsorbable sheet (iii) according to claim 1, case (1), wherein the support layer (ii) comprises the resin film layer (B) having an antistatic coat layer (L) formed on one surface thereof.

**3.** The electrostatic adsorbable sheet (iii) according to any one of claims 1 to 2, wherein the adsorbable sheet (i) comprises the adhesive layer (C), a coat layer (K), and the resin film layer (A) in this order.

**4.** The electrostatic adsorbable sheet (iii) according to claim 3, wherein the adsorbable sheet (i) comprises the adhesive layer (C), a printed image, the coat layer (K), and the resin film layer (A) in this order.

**5.** The electrostatic adsorbable sheet (iii) according to any one of claims 1 to 4, wherein the resin film layer (A) and the resin film layer (B) contain a thermoplastic resin.

**6.** The electrostatic adsorbable sheet (iii) according to any one of claims 1 to 5, wherein the surface of the resin film layer (A) which is in contact with the resin film layer (B) and the surface of the resin film layer (B) which is in contact with the resin film layer (A) each have a surface resistivity of $1\times10^{13}$ - $9\times10^{17}$ $\Omega$.

**7.** The electrostatic adsorbable sheet (iii) according to any one of claims 1 to 6, wherein the resin film layer (A) and the resin film layer (B) each have a basis weight of 20-500 g/$m^2$.

**8.** A method for producing the electrostatic adsorbable sheet (iii) according to any one of claims 1 to 7, comprising subjecting a resin film layer (A) and/or a resin film layer (B) to a charging treatment, laminating the resin film layer (A) with the resin film layer (B) by electrostatic adsorption, and then forming an adhesive layer (C) on the surface which is on the resin film layer (A) side.

**9.** A method for producing the electrostatic adsorbable sheet (iii) according to any one of claims 1 to 7, comprising forming an adhesive layer (C) on one surface of a resin film layer (A), subsequently subjecting the resin film layer (A) and/or a resin film layer (B) to a charging treatment, and laminating the resin film layer (A) with the resin film layer (B) by electrostatic adsorption.

**10.** The method for producing an electrostatic adsorbable sheet (iii) according to claim 8, wherein an adhesive layer (D) is formed on the surface which is on the resin film layer (B) side.

**11.** The method for producing an electrostatic adsorbable sheet (iii) according to claim 9, wherein an adhesive layer (D) is formed on one surface of the resin film layer (B) and the resin film layer (A) and/or the resin film layer (B) are subjected to the charging treatment.

**Patentansprüche**

**1.** Elektrostatische Adsorptionsfolie (iii), die ein Laminat ist, umfassend:

eine Adsorptionsfolie (i), die eine Harzfilmschicht (A) mit einer auf einer auf einer Oberfläche von dieser ausgebildeten Adhäsionsschicht (C) umfasst, wobei die Adhäsionsschicht (C) ein drucksensitives Adhäsiv enthält, und eine Ablösefolienschicht (E) ferner auf der Adhäsionsschicht (C) angeordnet ist,
wobei die Harzfilmschicht (A) der Adsorptionsfolie (i) und eine Harzfilmschicht (B) durch elektrostatische Adsorption aneinander anhaften, wobei das Laminat ferner entweder (1) oder (2) umfasst:

(1) eine Trägerschicht (ii), welche die Harzfilmschicht (B) umfasst, wobei die Oberfläche der Trägerschicht (ii), die nicht in Kontakt mit der Harzfilmschicht (A) ist, eine antistatische Eigenschaft hat, oder
(2) eine Adsorptionsfolie (iv), welche die Harzfilmschicht (B) mit einer über eine Oberfläche von dieser ausgebildeten Adhäsionsschicht (D) umfasst.

**2.** Elektrostatische Adsorptionsfolie (iii) nach Anspruch 1, Fall (1), wobei die Trägerschicht (i) die Harzfilmschicht (B) mit einer auf einer Oberfläche von dieser ausgebildeten antistatischen Deckschicht (L) umfasst.

**3.** Elektrostatische Adsorptionsfolie (iii) nach einem der Ansprüche 1 bis 2, wobei die Adsorptionsfolie (i) die Adhäsionsschicht (C), eine Deckschicht (K) und die Harzfilmschicht (A) in dieser Reihenfolge umfasst.

**4.** Elektrostatische Adsorptionsfolie (iii) nach Anspruch 3, wobei die Adsorptionsfolie (i) die Adhäsionsschicht (C), ein gedrucktes Bild, die Deckschicht (K) und die Harzfilmschicht (A) in dieser Reihenfolge umfasst.

**5.** Elektrostatische Adsorptionsfolie (iii) nach einem der Ansprüche 1 bis 4, wobei die Harzfilmschicht (A) und die Harzfilmschicht (B) ein thermoplastisches Harz enthalten.

**6.** Elektrostatische Adsorptionsfolie (iii) nach einem der Ansprüche 1 bis 5, wobei die Oberfläche der Harzfilmschicht (A), die in Kontakt mit der Harzfilmschicht (B) ist, und die Oberfläche der Harzfilmschicht (B), die in Kontakt mit der Harzfilmschicht (A) ist, jeweils einen Oberflächenwiderstand von $1\times10^{13}$ bis $9\times10^{17}$ $\Omega$ haben.

**7.** Elektrostatische Adsorptionsfolie (iii) nach einem der Ansprüche 1 bis 6, wobei die Harzfilmschicht (A) und die Harzfilmschicht (B) jeweils ein Grundgewicht von 20-500 g/m$^2$ haben.

**8.** Verfahren zum Herstellen der elektrostatischen Adsorptionsfolie (iii) nach einem der Ansprüche 1 bis 7, umfassend, eine Harzfilmschicht (A) und/oder eine Harzfilmschicht (B) einer Ladebehandlung zu unterziehen, die Harzfilmschicht (A) durch elektrostatische Adsorption mit der Harzfilmschicht (B) zu laminieren, und dann eine Adhäsionsschicht (C) auf der Oberfläche auszubilden, die sich auf der Seite der Harzfilmschicht (A) befindet.

**9.** Verfahren zum Herstellen der elektrostatischen Adsorptionsfolie (iii) nach einem der Ansprüche 1 bis 7, umfassend, eine Adhäsionsschicht (C) auf einer Oberfläche einer Harzfilmschicht (A) auszubilden, anschließend die Harzfilmschicht (A) und/oder eine Harzfilmschicht (B) einer Ladebehandlung zu unterziehen, und die Harzfilmschicht (A) durch elektrostatische Adsorption mit der Harzfilmschicht (B) zu laminieren.

**10.** Verfahren zum Herstellen der elektrostatischen Adsorptionsfolie (iii) nach Anspruch 8, wobei eine Adhäsionsschicht (D) auf der Oberfläche ausgebildet wird, die sich auf der Seite der Harzfilmschicht (B) befindet.

**11.** Verfahren zum Herstellen der elektrostatischen Adsorptionsfolie (iii) nach Anspruch 9, wobei eine Adhäsionsschicht (D) auf einer Oberfläche der Harzfilmschicht (B) ausgebildet wird, und die Harzfilmschicht (A) und/oder die Harzfilmschicht (B) der Ladebehandlung unterzogen werden.

## Revendications

**1.** Feuille adsorbante électrostatique (iii) qui est un stratifié comprenant :

une feuille adsorbante (i) comprenant une couche de film de résine (A) présentant une couche d'adhésif (C) formée sur une surface de celle-ci, sachant que la couche d'adhésif (C) contient un adhésif sensible à la pression, et une couche de feuille de détachement (E) est en outre disposée sur la couche d'adhésif (C),
sachant que la couche de film de résine (A) de la feuille adsorbante (i) et une couche de film de résine (B) adhèrent l'une à l'autre par adsorption électrostatique, le stratifié comprenant en outre l'un de (1) et (2) :

(1) une couche de support (ii) comprenant la couche de film de résine (B), sachant que la surface de la couche de support (ii) qui n'est pas en contact avec la couche de film de résine (A) a une capacité antistatique, ou
(2) une feuille adsorbante (iv) comprenant la couche de film de résine (B) présentant une couche d'adhésif (D) formée sur une surface de celle-ci.

**2.** La feuille adsorbante électrostatique (iii) selon la revendication 1, cas (1), sachant que la couche de support (ii) comprend la couche de film de résine (B) présentant une couche de revêtement antistatique (L) formée sur une surface de celle-ci.

**3.** La feuille adsorbante électrostatique (iii) selon l'une quelconque des revendications 1 à 2, sachant que la feuille adsorbante (i) comprend la couche d'adhésif (C), une couche de revêtement (K), et la couche de film de résine (A) dans cet ordre.

4. La feuille adsorbante électrostatique (iii) selon la revendication 3, sachant que la feuille adsorbante (i) comprend la couche d'adhésif (C), une image imprimée, la couche de revêtement (K), et la couche de film de résine (A) dans cet ordre.

5. La feuille adsorbante électrostatique (iii) selon l'une quelconque des revendications 1 à 4, sachant que la couche de film de résine (A) et la couche de film de résine (B) contiennent une résine thermoplastique.

6. La feuille adsorbante électrostatique (iii) selon l'une quelconque des revendications 1 à 5, sachant que la surface de la couche de film de résine (A) qui est en contact avec la couche de film de résine (B) et la surface de la couche de film de résine (B) qui est en contact avec la couche de film de résine (A) ont chacune une résistivité de surface de $1\times10^{13}$ à $9\times10^{17}$ $\Omega$.

7. La feuille adsorbante électrostatique (iii) selon l'une quelconque des revendications 1 à 6, sachant que la couche de film de résine (A) et la couche de film de résine (B) ont chacune un poids de base de 20 à 500 $g/m^2$.

8. Procédé de production de la feuille adsorbante électrostatique (iii) selon l'une quelconque des revendications 1 à 7, comprenant la soumission d'une couche de film de résine (A) et/ou d'une couche de film de résine (B) à un traitement de chargement, la stratification de la couche de film de résine (A) avec la couche de film de résine (B) par adsorption électrostatique, et puis la formation d'une couche d'adhésif (C) sur la surface qui est du côté de la couche de film de résine (A).

9. Procédé de production de la feuille adsorbante électrostatique (iii) selon l'une quelconque des revendications 1 à 7, comprenant la formation d'une couche d'adhésif (C) sur une surface d'une couche de film de résine (A), subséquemment la soumission de la couche de film de résine (A) et/ou d'une couche de film de résine (B) à un traitement de chargement, et la stratification de la couche de film de résine (A) avec la couche de film de résine (B) par adsorption électrostatique.

10. Le procédé de production d'une feuille adsorbante électrostatique (iii) selon la revendication 8, sachant qu'une couche d'adhésif (D) est formée sur la surface qui est du côté de la couche de film de résine (B).

11. Le procédé de production d'une feuille adsorbante électrostatique (iii) selon la revendication 9, sachant qu'une couche d'adhésif (D) est formée sur une surface de la couche de film de résine (B) et la couche de film de résine (A) et/ou la couche de film de résine (B) sont soumises au traitement de chargement.

FIG.1

1
7
2
5
18
3
6

FIG.2

9
7
2
5
1
18
3
6

FIG.3

17
11
7
2
5
1
18
3
6

FIG.4

17
11
7
2
5
1
18
3
6

FIG.5

13
7
2
5
1
18
3
6

FIG.6

1
7
15
2
5
18
3
6
16

FIG.7

9
7
15
5
18
6
16
1
2
3

FIG.8

17
11
7
15
5
18
6
16
1
2
3

FIG.9

13
7
15
5
18
6
16
1
2
3

FIG.10

13
7
5
18
6
16
1
2
3

FIG.11

17
13
7
5
18
6
16
1
2
3

FIG.12

20
21
7
5
18
6
16
1
2
3

FIG.13

17
20
21
7
5
18
6
16
1
2
3

FIG.14

19
22
21
7
5
18
6
16
1
2
3

FIG.15

17
19
22
21
7
5
18
6
16
1
2
3

FIG.16

17
20
21
7
15
2
5
1
18
3
6
16

FIG.17

17
19
22
21
7
15
2
5
1
18
3
6
16

FIG.18

1
7
2
5
18
4
6
8

FIG.19

9
7
2
5
1
18
4
6
8
10

FIG.20

17
11
7
2
5
1
18
4
6
8
12
17

FIG.21

17
11
7
2
5
1
18
4
6
8
10

FIG.22

13
7
2
5
1
18
4
6
8
14

FIG.23

9
7
15
2
5
1
18
4
6
16
8
10

FIG.24

17
11
7
15
5
18
6
16
8
12
1
2
4
17

FIG.25

20
5
18
6
1
2
3

FIG.26

20
5
18
6
16
1
2
3

FIG.27

7
12
5
18
6
9
1
2
3

FIG.28

33
31
34
32

FIG.29

35
31
34
32

FIG.30

36
31
37
32

FIG.31

38
37
31
32

FIG.32

39
37
31
32

FIG.33

42
43
49
48
47
45
46
44
41

FIG.34

53
52
53
51
54
55
56

FIG.35

62
63
64
Merry Christmas

FIG.36

61
62
63
64

FIG.37

62
63
64
65
Merry Christmas

FIG.38

61
62
63
64
65

FIG.39

71
72
Schedule
73

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110155311 A1
- JP 2001301104 A
- US 5665448 A
- US 20110143104 A1
- JP 2000297260 A
- JP 2001220560 A
- JP 2010046961 A
- JP 10504248 T